# EUROPÄISCHE PATENTSCHRIFT

(11) **EP 2 952 298 B1**
(45) Veröffentlichungstag und Bekanntmachung des Hinweises auf die Patenterteilung: **13.07.2022**
(21) Anmeldenummer: 15159031.2
(22) Anmeldetag: 13.03.2015
(51) Int. Cl.: B25J 9/00, B25J 9/08, B25J 21/00, B65G 47/14

(54) **ROBOTERMODUL**
ROBOT MODULE
MODULE DE ROBOT

(30) Priorität: 02.06.2014 DE 102014008107
(43) Veröffentlichungstag der Anmeldung: 09.12.2015
(73) Patentinhaber: Liebherr-Verzahntechnik GmbH, 87437 Kempten (DE)
(72) Erfinder: Mattern, Thomas, 87669 Rieden (DE); Hänschke, David, 87452 Altusried (DE); Riedmiller, Bernhard, 87497 Wertach (DE)
(74) Vertreter: Behr, Wolfgang

(56) Entgegenhaltungen:
- DE-A1- 4 212 178
- DE-A1- 19 519 524
- DE-A1-102012 005 735
- US-A1- 2006 108 342

## Beschreibung

Die vorliegende Erfindung betrifft ein Robotermodul. Insbesondere kann das erfindungsgemäße Robotermodul dabei als Handhabungsmodul eingesetzt werden, insbesondere zum Entnehmen von in einem Behälter angeordneten Werkstücken. Das Robotermodul kann jedoch auch zu anderen Zwecken eingesetzt werden.

Roboter werden im Bereich der Handhabung, Bearbeitung und / oder Montage von Werkstücken in vielfältigen Bereichen und Anwendungsfällen eingesetzt.

Dabei erfolgt die Konstruktion und Zusammenstellung einzelner Einheiten eines Handhabungs-, Bearbeitungs- und / oder Montagesystems üblicherweise individuell und je nach den konkreten Anforderungen. Neben dem Roboter sowie weiteren Einheiten, welche der Bereitstellung, Handhabung, Bearbeitung, Montage und / oder dem Abtransport der Werkstücke dienen, sind dabei üblicherweise weiterhin Zellenwände vorgesehen. Diese verhindern den unbefugten Zutritt in den Arbeitsbereich des Roboters oder der übrigen Komponenten. Auch diese werden üblicherweise separat und jeweils individuell für den einzelnen Einsatz konstruiert und montiert.

Aus der DE 10 2012 005 735 A1 ist eine Roboter-/Magazin-Zelle für die Handhabung und die Be- und Entladung von Objekten und Objektträgern in/aus zumindest einem Magazin, Regal oder dergleichen mittels zumindest einem Roboter bekannt. Dabei ist vorgesehen, dass die Roboter-/Magazin-Zelle als modulare und standardisierte weitestgehend aus selbsttragenden flächigen Bauelementen, wie Bleche und/oder Wannen und/oder abgekantete Bleche oder dergleichen aufgebaut ist, wobei zumindest die Seitenwände als flächige Bauelemente standardisierte, zumindest bereichsweise rasterförmig ausgebildete Lochbilder aufweisen, so dass sowohl Innenseite als auch Außenseite der Bauelemente für Anflanschungen und Befestigungen benutzbar sind. Aufgrund der geradlinigen und durchgängigen Konstruktion sollen Varianten innerhalb kürzester Zeit und ohne großen Engineering-Aufwand abgeleitet werden können. Weiterhin sollen sich verschiedene Elemente miteinander kombinieren lassen.

Weitere Roboterzellen sind aus der De 195 19 524 A1, der DE 42 12 178 A1 und der US 2006/0108342 A1 bekannt.

Aufgabe der vorliegenden Erfindung ist es, die Planung, Konstruktion und Bereitstellung von Einheiten, in welchen Roboter zum Einsatz kommen, zu vereinfachen.

Erfindungsgemäß wird diese Aufgabe durch ein Robotermodul gemäß Anspruch 1 gelöst.

Die vorliegende Erfindung zeigt dabei ein Robotermodul mit einem Zellenrahmen und einem Roboter, wobei der Zellenrahmen eine Bodenplatte aufweist, an welcher Roboter montiert ist, und mindestens eine mit der Bodenplatte verbundene Zellenwand und wobei das Robotermodul mit einem Steuermodul für den Roboter ausgestattet ist.

Das erfindungsgemäße Robotermodul stellt eine Komponente zur Verfügung, welche in einer Vielzahl von Anwendungen zum Einsatz kommen kann, ohne dass jedes Mal neu das Zusammenspiel von Robotermodul, Zellenrahmen und Steuermodul neu konstruiert und hergestellt werden müsste. Das Robotermodul kann damit in größerer Stückzahl gefertigt werden, und jeweils durch Kombination mit anderen Modulen an den jeweiligen Einsatzzweck angepasst werden. Hierdurch ergeben sich erhebliche Vorteile bei der Geschwindigkeit und den Kosten der Konstruktion, der Herstellung und der Endmontage.

Vorteilhafterweise ist das Robotermodul dabei so ausgestattet, dass es am Montageort nur noch mit anderen Modulen verbunden werden muss. Bevorzugt müssen dabei am Robotermodul selbst keine Montagearbeiten mehr durchgeführt werden. Insbesondere kann der Roboter damit bereits komplett mit der Steuerung verkabelt sein. Hierdurch verringern sich die Montagezeiten vor Ort erheblich. Bevorzugt ist das Robotermodul damit "hakenfertig" vormontiert.

Weiterhin vorteilhafterweise ist das Robotermodul dabei als Ganzes transportierbar.

Beispielsweise kann dabei ein Gabelstapler eingesetzt werden, welcher unter die Bodenplatte fährt und das Robotermodul als Ganzes transportiert. Alternativ oder zusätzlich kann das Robotermodul auch hängend transportierbar sein.

Der Roboter des erfindungsgemäßen Robotermoduls weist einen Arbeitsbereich auf, welcher größer als die Grundfläche der Bodenplatte ist. Insbesondere kann der Roboter dabei über mindestens zwei offene Seiten des Zellenrahmens Werkstücke, welche außerhalb des Robotermoduls angeordnet sind, handhaben, insbesondere greifen und / oder bearbeiten.

Der Arbeitsbereich des Roboters ist dabei so groß, dass er zu zwei Seiten des Zellenrahmens sich über dessen Grundfläche hinaus erstreckt. Das Robotermodul ist dabei so ausgestaltet, dass ein Greifer des Robotermoduls Werkstücke aus einem Bereich, welcher außerhalb einer ersten offenen Seite des Zellenrahmens angeordnet ist, entnehmen und in einen zweiten Bereich, welcher außerhalb einer zweiten offenen Seite des Zellenrahmens angeordnet ist, ablegen kann.

Bevorzugt ist der Zellenrahmen nach oben hin offen.

Der Zellenrahmen des erfindungsgemäßen Robotermoduls weist mechanische Verbindungspunkte zur Verbindung mit weiteren Modulen auf. Hierdurch kann am Aufstellort eine einfache mechanische Verbindung zwischen den einzelnen Modulen hergestellt werden. Bei den mechanischen Verbindungspunkten kann es sich beispielsweise um Bolzen und / oder Bolzenaufnahmen handeln, und / oder Schrauben und / oder Schraubdome, über welche eine mechanische Verbindung zwischen mehreren Modulen erfolgt.

Das erfindungsgemäße Robotermodul weist eine Elektrik-, Pneumatik- und / oder Hydraulikversorgung auf. Insbesondere kann dabei ein Druckluftgenerator und / oder eine Hydraulik-Hochdruckversorgung vorgesehen sein, und / oder eine Elektrikversorgung, welche ans Netz angeschlossen wird und die Komponenten des Robotermoduls mit elektrischer Energie versorgt.

Weiterhin weist das Robotermodul eine Elektrik-, Pneumatik- und / oder Hydraulik-schnittstelle zur Verbindung mit weiteren Modulen auf. Durch die Schnittstelle können die weiteren Module auf die Elektrik-, Pneumatik- und / oder Hydraulikversorgung des Robotermoduls zugreifen. Die weiteren Module benötigen hierdurch keine eigene Versorgung, was die Kosten verringert und die Montage vereinfacht. Weiterhin kann das Robotermodul eine Schnittstelle aufweisen, welche eine Koordinierung des Betriebs des Robotermoduls mit anderen Modulen erlaubt. Insbesondere handelt es sich dabei um eine Schnittstelle des Steuermoduls für den Roboter. Insbesondere erlaubt die Schnittstelle dabei einen Datenaustausch und / oder die Absendung und / oder Entgegennahme von Steuerbefehlen und / oder Sensordaten. Weiterhin kann das Robotermodul eine Schnittstelle für ein Fertigungssteuerungssystem aufweisen, welche eine Koordinierung des Betriebs mit einem weiteren Fertigungssystem ermöglicht.

Bevorzugt weist die Bodenplatte des Zellenrahmens eine rechteckige Form auf. Hierdurch ist die Kombination mit den Bodenplatten weiterer Module vereinfacht. Bevorzugt weist die Bodenplatte dabei eine längere und eine kürzere Seite auf.

Weiterhin kann vorgesehen sein, dass Zellenrahmen mindestens zwei Zellenwände aufweist. Die Zellenwände sind dabei bevorzugt mit der Bodenplatte verbunden. Die Zellenwände sorgen dabei bei einer aus dem Robotermodul und weiteren Modulen aufgebauten fertigen Anlage dafür, dass unbefugte Personen keinen Zutritt zum Arbeitsbereich des Robotermoduls erhalten. Bevorzugt weist der Zellenrahmen dabei auf zwei Seiten Zellenwände auf, während er auf zwei Seiten offen ist. Bevorzugt kann das Robotermodul dabei an den Seiten, an welchen keine Zellenwände vorgesehen sind, mit weiteren Modulen verbunden werden. Gegebenenfalls kann der Zellenrahmen auch auf drei Seiten Zellenwände aufweisen und nur an einer Seite hin offen sein. In diesem Fall wird das Robotermodul nur auf einer Seite mit einem oder mehreren Modulen verbunden.

In einer möglichen Ausführungsform der vorliegenden Erfindung sind die beiden Zellenwände dabei auf gegenüberliegenden Seiten der Bodenplatte angeordnet. Besonders bevorzugt sind die beiden Zellenwände dabei auf gegenüberliegenden Schmalseiten der Bodenplatte angeordnet. Hierdurch stehen die längeren Seiten der Bodenplatte zur Verbindung mit weiteren Modulen zur Verfügung, und damit ein entsprechend breiter Bereich, über welchen der Roboter des Robotermoduls mit den Komponenten der anderen Module zusammenwirken kann.

In einer zweiten Ausführungsform können die beiden Zellenwände auch auf angrenzenden Seiten der Bodenplatte angeordnet sein. Bevorzugt werden in diesem Fall weitere Module über Eck mit dem Robotermodul verbunden.

Der Zellenrahmen des erfindungsgemäßen Robotermoduls weist vertikal verlaufende Eckstreben auf, wobei die Eckstreben dabei über horizontal verlaufende Querstreben verbunden sind, um Zellenwände zu bilden. Hierdurch ergibt sich eine mechanisch stabile Konstruktion. Vorteilhafterweise sind die Eckstreben dabei in ihrem unteren Bereich mit der Bodenplatte verbunden.

Die Eckstreben weisen mechanische Verbindungspunkte zur Verbindung mit mindestens einem weiteren Modul auf. Insbesondere kann es sich dabei um jene mechanische Verbindungspunkte handeln, welche bereits oben näher dargestellt wurden.

Erfindungsgemäß kann vorgesehen sein, dass mindestens zwei der Seitenwände des Zellenrahmens in einem oberen Bereich über eine Transportstrebe miteinander verbindbar sind. Hierdurch wird der Zellenrahmen für den Transport versteift. Bevorzugt wird die Transportstrebe dann am Montageort wieder abgenommen, sodass sie den Arbeitsbereich des Roboters nicht einschränkt.

Das erfindungsgemäße Robotermodul weist bevorzugt ein Bedienmodul auf. Insbesondere kann das Bedienmodul dabei eine Ein- / Ausgabeschnittstelle aufweisen. Insbesondere kann dabei ein Display oder ein Monitor vorgesehen sein. Weiterhin bevorzugt sind Eingabeelemente wie eine Tastatur zur Eingabe von Daten oder Steuerbefehlen vorgesehen. Das Bedienmodul ist bevorzugt an einer Außenseite einer Zellwand angeordnet und/ oder kann auch mit einem mobilen Bedienelement ausgestattet sein. Das Bedienmodul erlaubt bevorzugt einen Zugriff auf das Steuermodul.

Das erfindungsgemäße Robotermodul kann weiterhin einen Schaltschrank aufweisen. Insbesondere kann in dem Schaltschrank die Elektronik-, Pneumatik- und / oder Hydraulikversorgung vorgesehen sein. Bevorzugt ist der Schaltschrank dabei von einer Außenseite einer Zellwand aus zugänglich. Bevorzugt sind dabei das Bedienmodul und der Schaltschrank in zwei unterschiedlichen Zellwänden des Zellenrahmens angeordnet, insbesondere auf gegenüberliegenden Seiten des Zellenrahmens.

Bei dem erfindungsgemäßen Robotermodul handelt es sich bevorzugt um ein Handhabungsmodul, insbesondere zur Handhabung von Werkstücken. Bevorzugt ist der Roboter hierfür mit einem Greifer ausgestattet oder austattbar. Alternativ oder zusätzlich kann das Steuermodul eine Steuerroutine zum Greifen und / oder Ablegen von Werkstücken mittels des Roboters aufweisen.

In einer möglichen, besonders bevorzugten Ausgestaltung erlaubt das Robotermodul ein Greifen von ungeordnet in einem Behälter angeordneten Werkstücken. Insbesondere kann das Steuermodul des Robotermoduls dabei eine Schnittstelle zu einer Objekterkennungseinrichtung zum Erfassen der Werkstücke im Behälter aufweisen. Weiterhin kann das Steuermodul Steuerroutinen zur Auswertung der Daten der Objekterkennungseinrichtung, zur Pfadplanung und zur Ansteuerung des Greifers aufweisen.

Insbesondere kann das erfindungsgemäße Robotermodul dabei in einer Vorrichtung zur Entnahme von Werkstücken aus einem Behälter eingesetzt werden, wie sie aus der EP 2 679 352 A1 bekannt ist.

Ein Robotermodul gemäß der vorliegenden Erfindung kann weiterhin eine Zwischenstation aufweisen, welche an der Bodenplatte des Robotermoduls angeordnet ist und auf welcher Werkstücke, welche von einem Greifer des Robotermoduls gegriffen wurden, abgelegt und von diesem oder einem anderen Greifer wieder aufgenommen werden können.

Weiterhin umfasst die vorliegende Erfindung eine Handhabungsanlage mit einem erfindungsgemäßen Robotermodul und einem Zwischenmodul, auf welchem eine Zwischenstation zum Ablegen und Wiederaufnehmen eines Werkstücks angeordnet ist. Das Zwischenmodul weist weiterhin einen Zellenrahmen auf. Weiterhin weist das Zwischenmodul eine Elektrik-, Pneumatik- und/oder Hydraulik-Schnittstelle zur Verbindung mit mindestens einem weiteren Modul und bevorzugt mit zwei Modulen auf.

Insbesondere kann das Zwischenmodul dabei eine Bodenplatte und mindestens zwei Zellenwände aufweisen. Bevorzugt ist die Zwischenstation dabei an der Bodenplatte angeordnet. Bevorzugt weist das Zwischenmodul dabei zwei offene Seiten auf.

Weiterhin umfasst die vorliegende Erfindung eine Handhabungsanlage mit einem erfindungsgemäßen Robotermodul und einer Zwischenstation zum Ablegen und Wiederaufnehmen eines Werkstücks, welche in einem Ausgabe- / Bearbeitungs- und/oder Montagemodul integrierbar ist.

Die vorliegende Erfindung umfasst weiterhin eine Handhabungsanlage mit einem erfindungsgemäßen Robotermodul und einem Zuführmodul mit einem Zellenrahmen und einer Anordnung zur Bereitstellung eines Behälters mit Werkstücken. Auch das Zuführmodul erlaubt damit eine besonders einfache Konstruktion, Herstellung und Montage einer Vorrichtung zur Handhabung von Werkstücken. Insbesondere müssen auch hier der Zellenrahmen und die Anordnung zur Bereitstellung eines Behälters mit Werkstücken nicht mehr jeweils separat konstruiert und montiert werden. Durch das Zuführmodul ergeben sich damit im Wesentlichen die gleichen Vorteile, welche bereits oben im Hinblick auf das erfindungsgemäße Robotermodul näher dargestellt wurden.

Insbesondere dient das Zuführmodul dabei zur Zuführung von Behältern mit Werkstücken, aus welchen ein erfindungsgemäßes Robotermodul Werkstücke entnehmen kann. Bevorzugt sind dabei das Zuführmodul und das erfindungsgemäße Robotermodul miteinander verbindbar.

Bevorzugt weist der Zellenrahmen des Zuführmoduls dabei mechanische Verbindungspunkte auf. Insbesondere erlauben die Verbindungspunkte dabei eine Verbindung mit Verbindungspunkten des Robotermoduls.

Das Zuführmodul weist eine Elektrik-, Pneumatik- und / oder Hydraulikschnittstelle zur Verbindung mit einer entsprechenden Schnittstelle des erfindungsgemäßen Robotermoduls auf. Insbesondere kann das Zuführmodul dabei über die Schnittstelle mit elektrischer, pneumatischer und / oder hydraulischer Energie versorgt werden. Hierdurch benötigt das Zuführmodul in einer bevorzugten Ausgestaltung keine eigene Elektrik-, Pneumatik- und / oder Hydraulikversorgung. Weiterhin kann das Zuführmodul eine Schnittstelle aufweisen, welche eine Koordinierung des Betriebs des Zuführmoduls mit anderen Modulen erlaubt. Insbesondere erlaubt die Schnittstelle dabei eine Verbindung mit dem Steuermodul des Robotermoduls. Dabei kann in einer möglichen Ausführungsform vorgesehen sein, dass im Zuführmodul angeordnete Aktoren über das Steuermodul des Robotermoduls angesteuert werden. Weiterhin kann vorgesehen sein, dass das Steuermodul Daten von Sensoren, welche im Zuführmodul angeordnet sind, erhält. In einer alternativen Ausführungsform kann das Zuführmodul jedoch auch ein eigenes Steuermodul aufweisen, welches Aktoren des Zuführmoduls ansteuert und / oder Sensoren des Zuführmoduls auswertet, wobei bevorzugt ein solches Steuermodul des Zuführmoduls über eine Schnittstelle mit dem Steuermodul des Robotermoduls kommuniziert. Weiterhin kann das Zuführmodul eine Schnittstelle für ein Fertigungssteuerungssystem aufweisen, welche eine Koordinierung des Betriebs mit einem weiteren Fertigungssystem ermöglicht.

Das Zuführmodul weist bevorzugt einen Zellenrahmen mit einer Bodenplatte auf, an welcher die Anordnung zur Bereitstellung eines Behälters mit Werkstücken angeordnet ist. Weiterhin kann vorgesehen sein, dass der Zellenrahmen des Zuführmoduls mindestens an zwei und bevorzugt an drei Seiten Zellenwände aufweist und auf mindestens einer Seite hin offen ist. Insbesondere kann der Zellenrahmen dabei bevorzugt über die offene Seite mit dem Robotermodul verbunden werden. Besonders bevorzugt erfolgt die Verbindung zwischen Robotermodul und Zuführmodul dabei in der Weise, dass ein Greifer des Robotermoduls in mindestens einen Behälter, welcher durch die Anordnung zur Bereitstellung eines Behälters bereitgestellt wird, greifen und aus diesem Werkstücke entnehmen kann.

Erfindungsgemäß kann vorgesehen sein, dass mindestens zwei der Seitenwände des Zellenrahmens in einem oberen Bereich über eine Transportstrebe miteinander verbindbar sind. Hierdurch wird der Zellenrahmen für den Transport versteift. Bevorzugt wird die Transportstrebe dann am Montageort wieder abgenommen, sodass sie den Arbeitsbereich des Roboters nicht einschränkt.

Die Anordnung zur Bereitstellung eines Behälters mit Werkstücken ist dabei bevorzugt auf mindestens einer Seite von außen zugänglich, insbesondere über eine auf mindestens einer Seite angeordneten Türe und / oder einen auf mindestens einer Seite angeordneten automatischen Zu- und / oder -Abführstrecke. Bevorzugt werden über diese Seite volle Behälter zugeführt und leere Behälter wieder abgeführt. Bevorzugt liegt die Seite, von welcher aus die Anordnung zur Bereitstellung eines Behälters mit Werkstücken von außen zugänglich ist, der offenen Seite gegenüber.

Die Zu- und / oder Abführrichtung der Behälterzu- und / oder -abführstrecke kann dabei je nach Ausgestaltung entweder parallel zu der offenen Seite angeordnet sein, oder senkrecht zu dieser, wobei in diesem Fall die Transportrichtung der Behälterzuführstrecke gegenläufig zur Transportrichtung der Behälterabführstrecke ist.

In einer besonders bevorzugten Ausführung der vorliegenden Erfindung handelt es sich bei der offenen Seite bevorzugt um eine Breitseite des Zuführmoduls. Bevorzugt ist damit eine Breitseite des Zuführmoduls offen, auf der gegenüberliegenden Seite erfolgt die Bereitstellung und Abführung der Behälter, und auf den Schmalseiten sind jeweils Zellwände vorgesehen, welche den Arbeitsbereich des Roboters abtrennen.

In einer bevorzugten Ausgestaltung der vorliegenden Erfindung kann die Anordnung zur Bereitstellung eines Behälters mit Werkstücken mindestens zwei Behälter aufnehmen. Dies erlaubt ein schnelles Weiterarbeiten, nachdem ein erster Behälter entleert wurde.

In einer möglichen Ausführungsform der vorliegenden Erfindung weist das Zuführmodul eine Trennvorrichtung auf, über welche ein Zuführbereich für einen Behälter von einem Arbeitsbereich des Greifers trennbar ist. Eine solche Trennvorrichtung ist insbesondere dann von Vorteil, wenn die Behälter einzeln beispielsweise über ein Transportfahrzeug zugeführt und wieder abgeführt werden. Die Trennvorrichtung sorgt in diesem Fall dafür, dass der Roboter weiterhin Werkstücke aus einem Behälter, welcher sich im Arbeitsbereich des Roboters befindet, entnehmen kann, während im Zuführbereich ein neuer Behälter zugeführt oder ein entleerter Behälter entnommen wird.

Insbesondere kann dabei eine Haube vorgesehen sein, welche so im Zuführmodul angeordnet ist, dass sie wahlweise über den Zuführbereich für den einen oder den anderen Behälter bewegt werden kann. Insbesondere kann die Haube dabei verschiebbar und/oder verschwenkbar sein.

In einer alternativen Ausführungsform kann das Zuführmodul in einer Trarisportanordnung zum Transport der Behälter im Inneren des Zuführmoduls aufweisen. Insbesondere kann diese Transportanordnung dabei mit einer automatischen Behälterzu- und / oder -abführstrecke zusammenwirken. Die Transportanordnung zum Transport der Behälter im Inneren des Zuführmoduls erlaubt es dabei, einen durch den Roboter entleerten Behälter weiter zu transportieren und der Abführstrecke zuzuführen. In einer möglichen Ausführungsform ist dabei eine Lichtschranke vorgesehen, welche den Zuführbereich absichert.

Bei der Transportanordnung kann es sich dabei in einer möglichen Ausführungsform um eine Quershuttle handeln, welche die Behälter im Inneren des Zuführmoduls senkrecht zu einer Zu- bzw. Abführrichtung der automatischen Zu- und / oder Abführstrecke verschiebt. Die Behälter werden also auf einer Seite voll zugeführt, im Inneren des Zuführmoduls entleert, und dann über das Quershuttle zu dem Eingangsbereich der Abführstrecke verschoben, von wo aus sie wieder entnommen werden.

Alternativ kann es sich bei der Transportanordnung des Zuführmoduls um einen Drehtisch handeln, auf welchen die Behälter anordenbar sind, wobei die Behälter durch Drehen des Drehtisches von einem Zuführbereich des Zuführmoduls in einen Arbeitsbereich des Greifers des Robotermoduls verfahrbar sind und umgekehrt.

Weiterhin kann das Zuführmodul mit einem fahrerlosen Transportsystem zusammenwirken.

Die vorliegende Erfindung umfasst weiterhin eine Handhabungsanlage für Werkstücke mit einem Robotermodul und mindestens einem Zwischenmodul und/oder einem Zuführmodul, wie sie oben dargestellt wurden.

Die Handhabungsanlage kann weiterhin ein Ausgabe-, Bearbeitungs- und / oder Montagemodul zur Verbindung mit einem Robotermodul, wie es oben dargestellt wurde, aufweisen. Insbesondere weist das Ausgabe-, Bearbeitungs- und / oder Montagemodul dabei eine Endablage auf, auf welcher Werkstücke vereinzelt und / oder in einer definierten Position durch einen Greifer des Robotermoduls abgelegt werden können. Weiterhin vorteilhafterweise weist das Modul dabei mechanische Verbindungspunkte zur Verbindung mit einem Robotermodul, wie es oben dargestellt wurde, auf. Ein Ausgabemodul weist dabei bevorzugt eine Transportstrecke für die Werkstücke auf, über welche die Werkstücke abtransportiert werden können. Ein Bearbeitungs- und / oder Montagemodul weist bevorzugt eine Bearbeitungs- und / oder Montageeinheit auf, durch welche Werkstücke bearbeitet und / oder montiert werden können.

Das Ausgabe-, Bearbeitungs- und / oder Montagemodul weist bevorzugt einen Zellenrahmen auf, welcher bevorzugt eine Bodenplatte und/oder eine oder mehrere Seitenwände aufweist.

Erfindungsgemäß kann vorgesehen sein, dass mindestens zwei der Seitenwände des Zellenrahmens in einem oberen Bereich über eine Transportstrebe miteinander verbindbar sind. Hierdurch wird der Zellenrahmen für den Transport versteift. Bevorzugt wird die Transportstrebe dann am Montageort wieder abgenommen, sodass sie den Arbeitsbereich des Roboters nicht einschränkt.

Bevorzugt weist der Zellenrahmen mechanische Verbindungspunkte auf. Insbesondere erlauben die Verbindungspunkte dabei eine Verbindung mit Verbindungspunkten des Robotermoduls.

Die vorliegende Erfindung wird nun anhand von Ausführungsbeispielen sowie Zeichnungen näher beschrieben.

Dabei zeigen:
- Fig. 1:: eine schematische Darstellung der erfindungsgemäßen Modulbauweise einer Vorrichtung zum automatisierten Entnehmen von in einem Behälter angeordneten Werkstücken bzw. Handhabungsanlage,
- Fig. 2a:: eine erste Variante der Modulbauweise, bei welcher zusätzlich ein Montagemodul vorgesehen ist,
- Fig. 2b:: eine zweite Variante, bei welcher das Ausgabemodul aus einem Übergabemodul und einer Palletierzelle besteht,
- Fig. 3:: ein erstes Ausführungsbeispiel einer erfindungsgemäßen Vorrichtung, bei welcher die Behälter über ein Transportfahrzeug in das Zuführmodul verfahren werden können,
- Fig. 4:: ein zweites Ausführungsbeispiel, bei welchem die Behälter über eine automatisierte Zuführstrecke zugeführt und über eine automatisierte Abführstrecke abgeführt werden,
- Fig. 5:: ein drittes Ausführungsbeispiel, bei welchem ein Transportband zur Zu- und Abfuhr der Behälter eingesetzt wird, sowie ein weiteres Transportband zum Abführen der Werkstücke,
- Fig. 6:: ein viertes Ausführungsbeispiel, bei welchem das Zuführmodul einen Drehteller aufweist,
- Fig. 7a:: ein fünftes Ausführungsbeispiel, bei welchen eine Zwischenstation vorgesehen ist,
- Fig. 7b:: ein sechstes Ausführungsbeispiel, bei welchem das Ausgabemodul durch eine Palletierzelle gebildet wird,
- Fig. 8:: ein siebtes Ausführungsbeispiel, bei welchem das Ausgabemodul mit einer Palletierzelle in Verbindung steht,
- Fig. 9:: ein Ausführungsbeispiel einer Vorrichtung zum automatisierten Entnehmen von in einem Behälter angeordneten Werkstücken, bei welcher mehrere Handhabungsmodule parallel Werkstücke auf einem gemeinsamen Ausgabemodul ablegen,
- Fig. 10:: ein weiteres Ausführungsbeispiel, bei welchem zwischen zwei Handhabungsmodulen ein Zwischenmodul mit einer Zwischenstation geschaltet ist,
- Fig. 11:: ein Ausführungsbeispiel eines erfindungsgemäßen Robotermoduls bzw. eines erfindungsgemäßen Handhabungsmoduls,
- Fig. 12a:: eine Detailansicht der in Fig. 11 vorgesehenen mechanischen Verbindungselemente,
- Fig. 12b:: eine Detailansicht der in Fig. 11 vorgesehenen pneumatischen Verbindungselemente,
- Fig. 13:: ein Ausführungsbeispiel einer Zuführstation,
- Fig. 14:: die Kombination aus dem in Fig. 11 gezeigten Ausführungsbeispiel eines erfindungsgemäßen Roboter- und / oder Handhabungsmoduls mit dem in Fig. 13 gezeigten Zuführmodul,
- Fig. 15:: eine Darstellung eines Ausführungsbeispiels einer erfindungsgemäßen Vorrichtung zum automatisierten Entnehmen von in einem Behälter angeordneten Werkstücken bzw. einer erfindungsgemäßen Kombination aus einem Roboter- und / oder Handhabungsmodul, einem Zuführmodul und einem Ausgabemodul, und
- Fig. 16:: die in Fig. 15 gezeigte Kombination aus Modulen in ihrer zusammengebauten Anordnung.

Die vorliegende Erfindung betrifft in einem ersten Aspekt den modularen Aufbau einer Vorrichtung zum automatisierten Entnehmen von in einem Behälter angeordneten Werkstücken. Solche Vorrichtungen weisen eine Objekterkennungseinrichtung zum Erfassen der im Behälter vorhandenen Werkstücke auf, sowie einen Greifer zum Greifen und Entnehmen der Werkstücke aus dem Behälter, um sie gegebenenfalls über eine oder mehrere Zwischenstationen auf einer Endablage abzulegen. Die Vorrichtung weist weiterhin eine Steuerung zur Auswertung der Daten der Objekterkennungseinrichtung auf, zur Pfadplanung und zur entsprechenden Ansteuerung des Greifers.

Solche Vorrichtungen erlauben es, unsortiertes Schüttgut, welches einer Produktionseinheit oder Fertigungs- und/oder Montagelinie ungeordnet in Behältern zugeführt wird, zu vereinzeln und so der weiteren Produktion zuzuführen.

Solche Vorrichtungen erfordern dabei üblicherweise eine Anpassung an die Bedürfnisse der jeweiligen Produktionseinheit oder Fertigungs- und/oder Montagelinie, um den Anforderungen, welche durch die unterschiedlichen Werkstücke und / oder die Zufuhr und / oder Ausgabe der Werkstücke gestellt werden, gerecht zu werden. Dabei musste die Umsetzung bisher für jeden Kunden neu konstruiert werden.

Die vorliegende Erfindung stellt dagegen einen Modulaufbau für eine solche Vorrichtung zur Verfügung, welche ohne oder zumindest unter Verringerung von aufwändigen Individualkonstruktionen eine Vorrichtung zum automatisierten Entnehmen von in einem Behälter angeordneten Werkstücken zu Verfügung stellt, welche ggf. in bestehende Bearbeitungs- und / oder Fertigungseinheiten integriert werden kann.

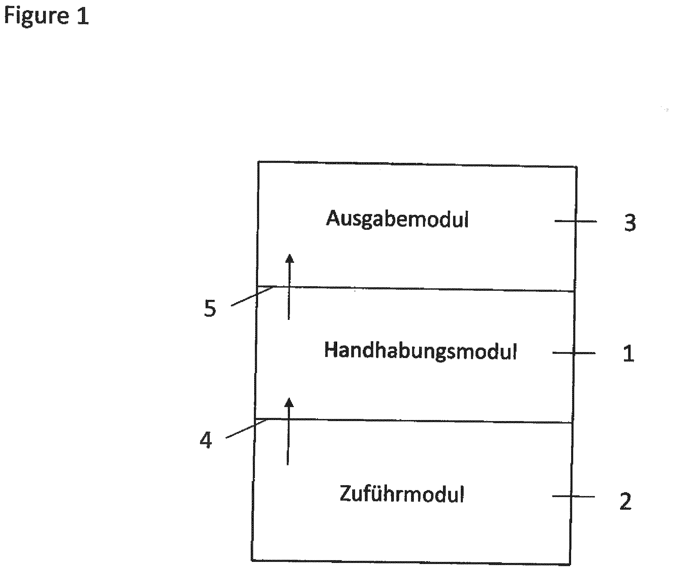

Die erfindungsgemäße Modulbauweise ist in Fig. 1 schematisch dargestellt und teilt eine Vorrichtung zum automatisierten Entnehmen von in einem Behälter angeordneten Werkstücken in ein zentrales Handhabungsmodul 1 auf, auf welchem die Greiferkinematik angeordnet ist, bei der es sich insbesondere um einen Roboter oder ein Flächenportal zur Bewegung des Greifers handelt. Das Handhabungsmodul 1 wird mit einem Zuführmodul 2 kombiniert, welches eine Anordnung zur Bereitstellung der Behälter mit den Werkstücken aufweist. Weiterhin wird die Anordnung aus Handhabungsmodul 1 und Zuführmodul 2 üblicherweise mit einem Ausgabemodul 3 kombiniert, auf welchem der Greifer des Handhabungsmoduls 1 die Werkstücke vereinzelt ablegt. Das Ausgabemodul 3 weist dabei üblicherweise eine Transportstrecke zum Abtransport der Werkstücke auf.

Zwischen dem Handhabungsmodul 1, dem Zuführmodul 2 und dem Ausgabemodul 3 sind jeweils Schnittstellen 4 bzw. 5 vorgesehen, über welche die einzelnen Module miteinander verbunden werden. Dabei kann es sich um eine mechanische Schnittstelle handeln. Weiterhin kann auch eine Elektrik-, Pneumatik- und / oder Hydraulikschnittstelle vorgesehen sein. Zudem kann die Schnittstelle eine Koordination des Betriebs zwischen den einzelnen Modulen erlauben. Zusätzlich kann eine Schnittstelle zu einem Fertigungssystem vorgesehen sein.

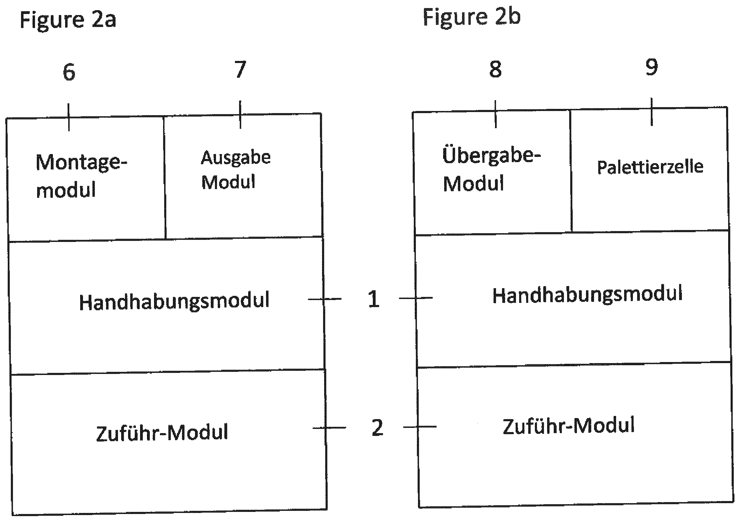

In Fig. 2a und 2b sind dabei zwei Varianten des in Fig. 1 gezeigten grundlegenden Modulaufbaus gezeigt. In Fig. 2a ist zusätzlich zu dem Handhabungsmodul 1, dem Zuführmodul 2 und dem Ausgabemodul 7 ein Montagemodul 6 vorgesehen. An diesem können Werkstücke beispielsweise bearbeitet und / oder Montageschritte an den Werkstücken vorgenommen werden. Dabei können die Werkstücke von dem Handhabungsmodul zunächst an das Montagemodul gegeben werden, und von diesem über das Handhabungsmodul wieder zum Ausgabemodul 7 gegeben werden.

In Fig. 2b ist eine Variante dargestellt, bei welcher das Handhabungsmodul 1 über ein Übergabemodul 8 mit einer Palletierzelle 9 in Verbindung steht. Bei dem Übergabemodul kann es sich beispielsweise um ein Transportband handeln, auf welchem Palletierkörbe zur Palletierzelle transportierbar sind. Die Werkstücke können dann zunächst in die Palletierkörbe im Bereich des Übergabemoduls 8 abgelegt werden. Die Palletierkörbe werden dann in die Palletierzelle 9 transportiert, wofür bevorzugt eine entsprechende Transporteinrichtung vorgesehen ist.

Das Übergabemodul kann entweder an einer Palettierzelle angegliedert sein oder es kann als Übergabemodul in einer Palettierzelle integriert sein und damit eine Direkteingabe in die Palettierzelle ermöglichen.

Als Basiseinheit für sämtliche Varianten der erfindungsgemäßen Vorrichtung dient dabei das Handhabungsmodul, welches mit unterschiedlichen Zuführmodulen kombiniert werden kann. Die Einheit aus Handhabungsmodul und Zuführmodul kann dann durch unterschiedliche Arten eines Ausführmoduls erweitert werden, oder an bestehenden Transport-, Bearbeitungs- und / oder Montageeinheiten angebaut werden.

Der modulare Aufbau ermöglicht es, die vielfältigen und variantenreichen Anforderungen der Kunden im Hinblick auf Fertigungs-, Bearbeitungs- und Montagelinien ohne eine jeweils komplette Neukonstruktion zu bedienen. Weiterhin erlauben die Schnittstellen eine einfache und schnelle Montage vor Ort, da die einzelnen Module vormontiert geliefert und am Montageort nur noch miteinander verbunden werden müssen.

In einer Ausgestaltung der vorliegenden Erfindung weisen insbesondere das Handhabungsmodul 1 und das Zuführmodul 2 jeweils einen Zellenrahmen auf. Dieser umfasst üblicherweise eine Bodenplatte sowie eine oder mehrere Zellenwände, welche bei einer aufgebauten Vorrichtung den unbefugten Zugang zum Arbeitsbereich des Handhabungsgerätes verhindern. Die Zellenrahmen der einzelnen Module werden dabei über mechanische Verbindungspunkte miteinander verbunden. Weiterhin können Elektrik-, Pneumatik- und / oder Hydraulikschnittstellen zur Verbindung der Module vorgesehen sein. Insbesondere können die einzelnen Module dabei komplett aufgebaut geliefert und dann durch wenige Handgriffe miteinander verbunden werden.

Das Handhabungsmodul 1 weist dabei in seiner Grundausstattung die Greiferkinematik auf, d. h. eine Anordnung, über welche der Greifer zum Entnehmen der Werkstücke aus dem Behälter und zum Ablegen auf einer Zwischen- oder Endablage bewegt werden kann. Insbesondere wird hierfür ein Roboter eingesetzt, insbesondere ein Sechsachs-Roboter. Alternativ kann jedoch auch ein Flächenportal eingesetzt werden. Weiterhin weist das Handhabungsmodul eine entsprechende Ansteuerung für die Greiferkinematik und den Greifer auf. Im Ausführungsbeispiel weist das Handhabungsmodul weiterhin ein Bedienmodul mit einer Benutzerschnittstelle auf, über welche auf die Steuerung zugegriffen werden kann. Weiterhin kann eine Elektrik-, Pneumatik- und / oder Hydraulikversorgung vorgesehen sein, insbesondere in einem Schaltschrank. Die Benutzerschnittstelle und der Schaltschrank sind bevorzugt von den Außenseiten der Zellenwände aus zugänglich.

Die erfindungsgemäße Vorrichtung zum Entnehmen von Werkstücken aus den Behältern weist dabei eine Objekterfassungseinrichtung mit einem Sensor auf. Dieser ist jeweils im Bereich des Zuführmoduls angeordnet und kann oberhalb eines zu entleerenden Behälters angeordnet werden, um die Werkstücke im Behälter zu erfassen. Insbesondere handelt es sich dabei um einen 3 D Laserscanner. Die Daten des Sensors werden dabei ausgewertet, um die einzelnen Werkstücke und deren Positionen zu identifizieren und ein zum Greifen geeignetes Werkstück zu ermitteln. Anhand der Positionsdaten dieses Werkstücks erfolgt dann eine Bahnplanung für den Greifer bzw. für dessen Greiferkinematik, insbesondere für den Roboter 10. Der Sensor steht hierfür über eine Schnittstellte mit der Steuerung des Handhabungsmoduls im Verbindung.

Im Folgenden werden nun einige Varianten beschrieben, wie ein erfindungsgemäßes Handhabungsmodul mit unterschiedlichen Zuführmodulen und / oder Ausgabemodulen kombiniert werden kann.

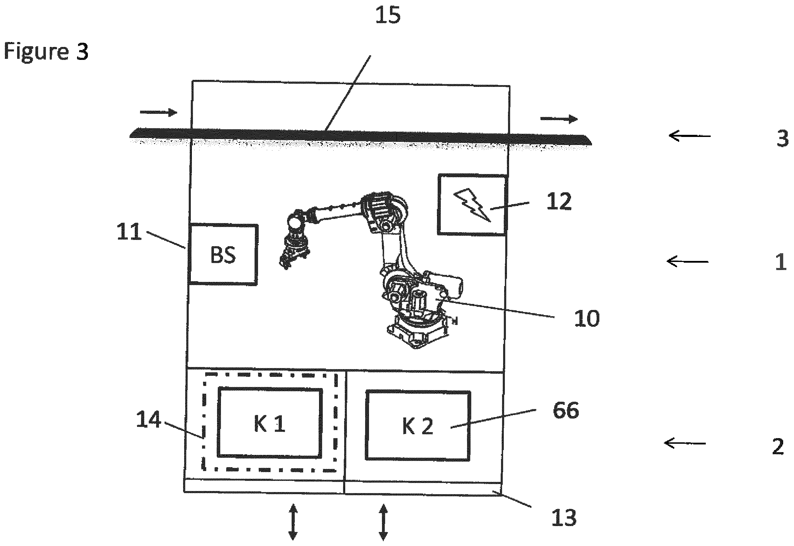

In Fig. 3 ist dabei zunächst das Handhabungsmodul 1 gezeigt, welches einen Roboter 10, die Benutzerschnittstelle 11 und die Energieversorgung 12 aufweist. Das Handhabungsmodul 1 weist dabei zwei offene Seiten auf, über welche es mit einem Zuführmodul 2 und einem Ausgabemodul 3 in Verbindung steht.

Bei dem in Fig. 3 gezeigten Ausführungsbeispiel weist das Zuführmodul 2 zwei nebeneinander angeordnete Zuführbereiche für Behälter auf, welche jeweils über eine Tür 13 von außen zugänglich sind. Die Behälter 66 können dabei beispielsweise über einen Gabelstapler in den jeweiligen Zuführbereich eingeschoben bzw. aus diesem entnommen werden. Um die Zuführbereiche für die Behälter von dem Arbeitsbereich des Greifers zu trennen, ist eine Haube 14 vorgesehen, welche wahlweise über den Zuführbereich für den einen oder den anderen Behälter geschoben werden kann. Ist damit einer der beiden Behälter komplett entleert, fährt die Haube über diesen, und gibt damit den anderen Behälter für den Greifer frei. Der Greifer kann damit nahtlos mit dem Entleeren fortfahren. Durch die Haube 14, welche den Zuführbereich für den nun entleerten Behälter abdeckt, kann dieser nun gefahrlos entnommen und durch einen vollen Behälter ersetzt werden.

Als Ausgabemodul dient in Fig. 3 eine Transportstrecke 15, auf welcher die aus den Behältern entnommenen Werkstücke vereinzelt abgelegt werden. Die Transportstrecke kann dafür gegebenenfalls entsprechende Aufnahmen aufweisen. Im Ausführungsbeispiel handelt es sich um ein Transportband.

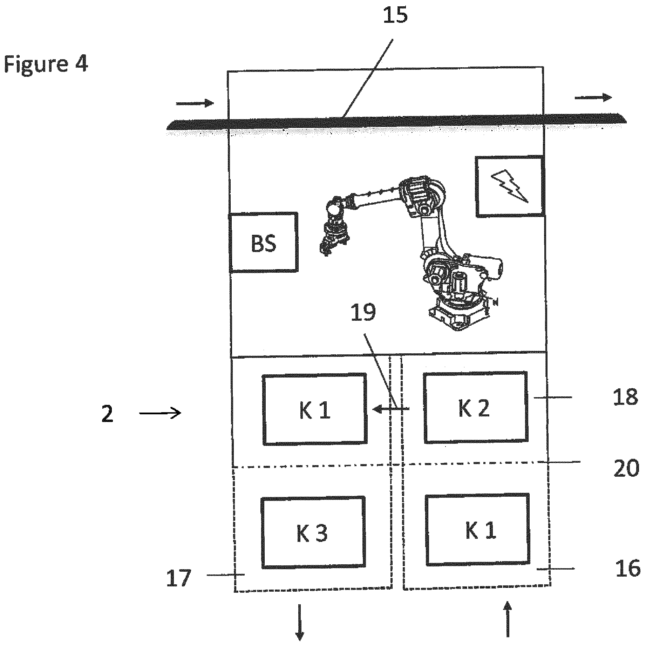

Das in Fig. 4 dargestellte Ausführungsbeispiel unterscheidet sich von dem in Fig. 3 dargestelltem Ausführungsbeispiel durch ein anders gestaltetes Zuführmodul 2. Das Zuführmodul steht dabei mit einer automatisierten Behälterzuführstrecke 16 und einer automatisierten Behälterabführstrecke 17 in Verbindung, über welche volle Behälter zugeführt bzw. leere Behälter abgeführt werden. Die Zuführrichtung der Zuführstrecke 16 ist dabei entgegengesetzt zur Abführrichtung der Abführstrecke 17.

Im Zuführmodul 2 ist daher ein Quershuttle 18 vorgesehen, über welches Behälter in Bewegungsrichtung 19 quer zur Zuführ- bzw. Abführrichtung verfahren werden können. Behälter werden also von der Zuführstrecke 16 in den Zuführbereich des Zuführmoduls transportiert. Dort können die Behälter von dem Handhabungsmodul entleert werden. Ein entleerter Behälter wird dann über das Quershuttle 18 zu einem Übergabebereich zur Übergabe an die Abführstrecke 17 verfahren, von wo aus die entleerten Behälter entnommen werden. Alternativ kann ein befüllter Behälter auch zunächst über das Quershuttle innerhalb der Zuführanordnung transportiert werden, und erst danach das Entnehmen von Werkstücken aus dem Behälter erfolgen. Im Ausführungsbeispiel ist dabei weiterhin eine Lichtschranke 20 vorgesehen, welche zwischen dem Zuführmodul und der Zufuhrstrecke 16 und / oder Abfuhrstrecke 17 angeordnet ist. Die Lichtschranke verhindert dabei den Zugang von Personen in den Bereich des Zuführmoduls.

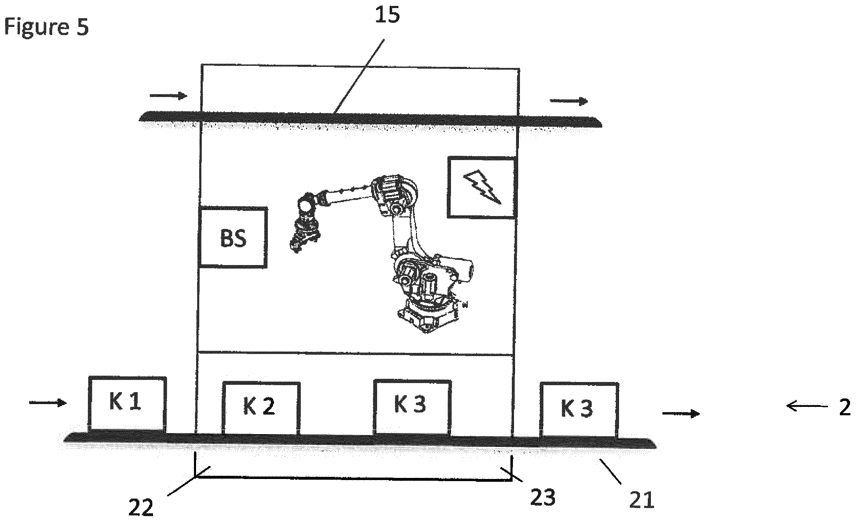

Bei dem in Fig. 5 gezeigten Ausführungsbeispiel ist als Zuführmodul 2 eine Transportstrecke 21 für die Behälter vorgesehen, insbesondere ein Transportband, über welche sowohl die Zufuhr von vollen Behältern, als auch die Abfuhr von entleerten Behältern erfolgt. Insbesondere erfolgt die Zu- und Abfuhr dabei ohne Richtungsänderung einfach durch Weitertransport auf der Transportstrecke. Das Zuführmodul 2 weist dabei bevorzugt auf seinen Schmalseiten 22 und 23 Öffnungen auf, durch welche die Transportstrecke mit den Behältern hindurchgeht.

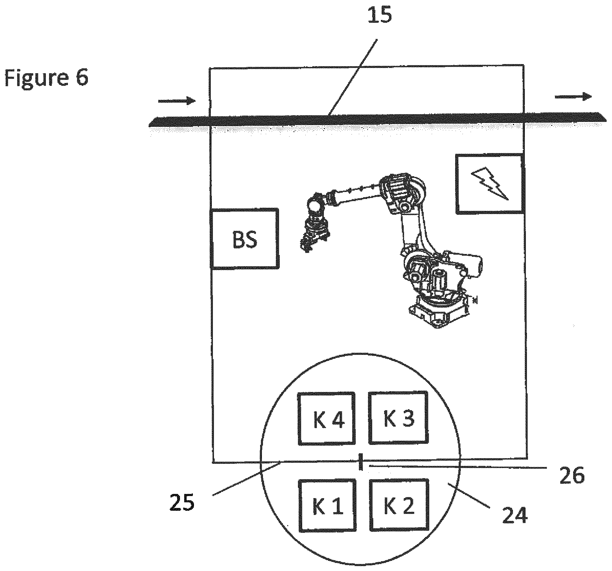

Bei dem in Fig. 6 dargestellten Ausführungsbeispiel weist die Zuführanordnung einen Drehteller 24 auf, auf welchem mehrere Behälter angeordnet werden können. Der Drehteller 24 ist dabei um eine vertikale Drehachse 26 drehbar, um die Behälter von einem Zuführbereich für die Behälter in den Arbeitsbereich des Handhabungsmoduls zu bringen.

Bevorzugt weist der Drehteller 24 dabei eine Trennwand 25 auf, welche den Arbeitsbereich des Greifers von dem Zuführbereich für die Behälter trennt. Das Zuführen und Entnehmen der Behälter zu bzw. von dem Drehteller kann dabei wieder über ein Transportfahrzeug, bspw. einen Gabelstapler, erfolgen. Alternativ kann auch ein solcher Drehteller mit einer automatisierten Zu- und / oder Abführstrecke für die Behälter kombiniert werden.

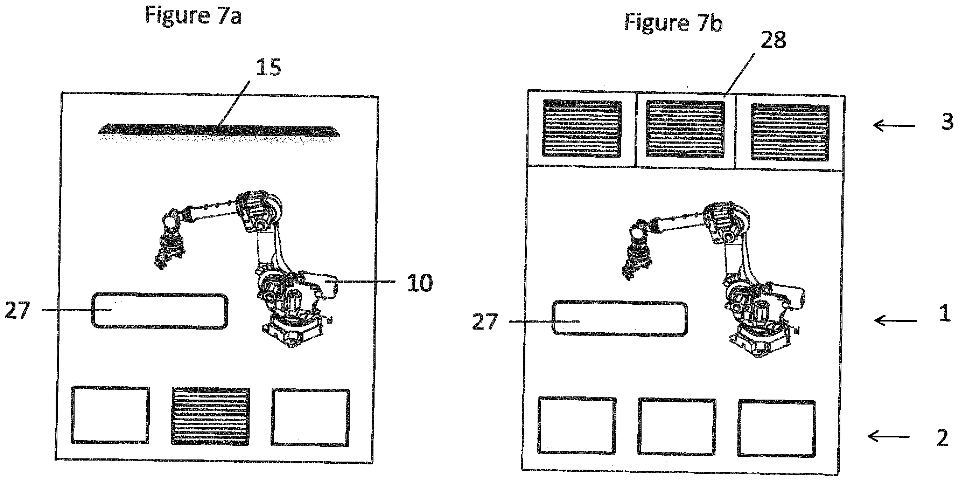

Bei den in Fig. 7a und 7b gezeigten Ausführungsbeispielen ist im Bereich des Handhabungsmoduls 1 weiterhin eine Zwischenstation 27 vorgesehen, auf welcher der Greifer des Handhabungsmoduls Werkstücke, welche aus den Behältern im Bereich des Zuführmoduls entnommen werden, ablegen und gegebenenfalls neu greifen kann. Insbesondere ermöglicht die Zwischenstation dabei einen genaueren Griff und damit eine genauere Ablage im Bereich des Ausgabemoduls. Als Zuführmodul 2 kann dabei ein beliebiges Zuführmodul eingesetzt werden, welches in Fig. 7a und 7b lediglich schematisch dargestellt ist. Weiterhin kann auch ein beliebiges Ausgabemodul eingesetzt werden.

In Fig. 7a wird dabei wieder eine Transportstrecke 15 als Ausgabemodul eingesetzt. In Fig. 7b ist als Ausgabemodul 3 dagegen eine Palletierzelle 28 vorgesehen, in welche die Werkstücke ablegt werden.

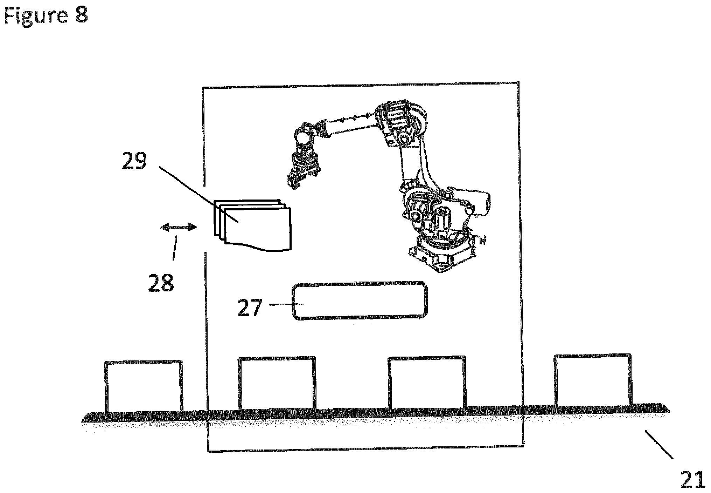

In Fig. 8 ist ein weiteres Ausführungsbeispiel dargestellt, bei welchem die Zu- und Abfuhr der Behälter über ein Transportband 21 erfolgt. Weiterhin ist hier im Bereich des Handhabungsmoduls eine Zwischenablage 27 vorgesehen. Die Ablage erfolgt dabei in Palletierkörbe 29, welche über eine Transportstrecke 28 zu einer Palletierzelle verfahren werden.

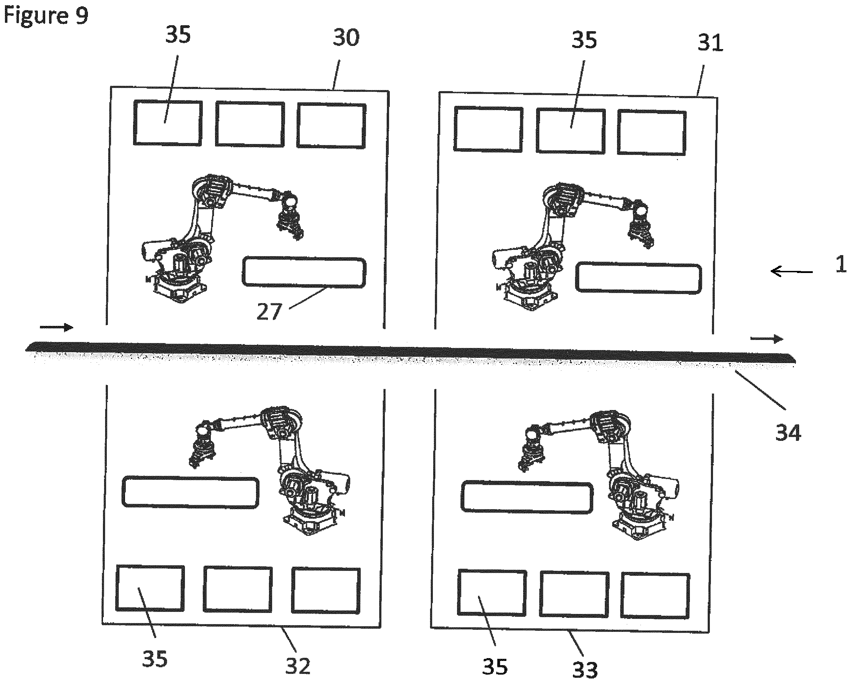

In Fig. 9 ist eine Anordnung gezeigt, bei welcher mehrere Handhabungsmodule 1 mit einem einzigen Ausgabemodul 34, im Ausführungsbeispiel wieder einem Transportband, kombiniert werden. Die Handhabungsmodule arbeiten dabei parallel, und legen jeweils vereinzelte Werkstücke auf dem Ausgabemodul 34 ab. Ausführungsbeispiel sind die einzelnen Handhabungsmodule 1 dabei jeweils mit separaten Zuführmodulen 35 kombiniert und bilden damit Entnahmeeinheiten 30 bis 33. Dabei sind im Ausführungsbeispiel jeweils zwei Entnahmeeinheiten 30 bzw. 32 auf gegenüberliegenden Seiten des Transportbandes 34 vorgesehen, sodass die Beladung von gegenüberliegenden Seiten erfolgt. Weiterhin sind jeweils zwei Entnahmeeinheiten entlang des Transportbandes 34 hintereinander angeordnet.

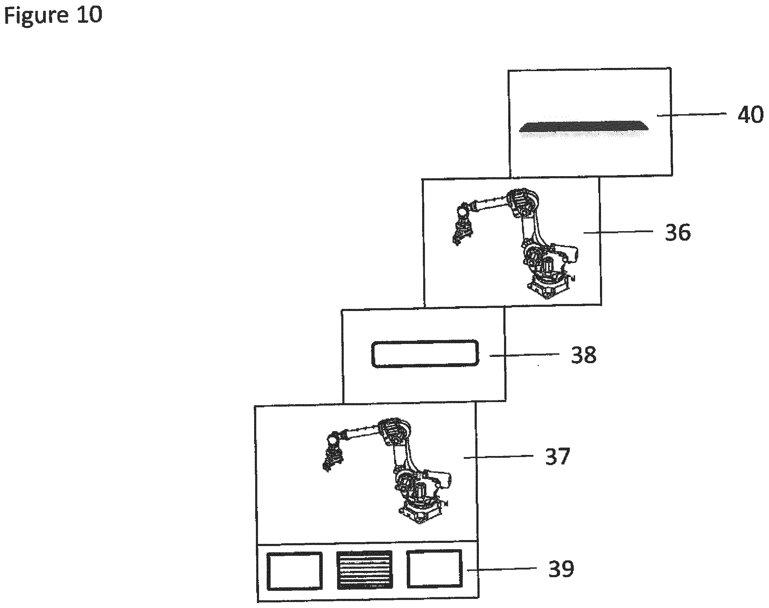

In Fig. 10 ist ein Ausführungsbeispiel gezeigt, bei welchem ebenfalls mehrere Handhabungsmodule eingesetzt werden. Diese werden hierbei jedoch in Serie geschaltet, so dass die Werkstücke jeweils nacheinander von zwei unterschiedlichen Handhabungsmodulen gehandhabt werden. Dies ermöglicht insbesondere eine Erhöhung der Griffgenauigkeit beim Ablegen auf der Endablage. Im Ausführungsbeispiel sind dabei die Handhabungsmodule 36 und 37 vorgesehen, welche über ein Zwischenmodul 38 mit einer Zwischenstation kombiniert werden. Die einzelnen Module können dabei wie in Fig. 10 schematisch dargestellt versetzt miteinander kombiniert werden, bevorzugt jedoch fluchtend. Die Anordnung aus den beiden Handhabungsmodulen 36 und 37 und dem Zwischenmodul 38 wird dann mit einem Zuführmodul 39 und einem Ausgabemodul 40 kombiniert. Das erste Handhabungsmodul 37 entnimmt dabei Werkstücke aus den Behältern im Bereich des Zuführmoduls 39 und legt diese auf der Zwischenstation des Zwischenmoduls 38 ab, von wo aus diese über das zweite Handhabungsmodul 36 wieder gegriffen und im Bereich des Ausgabemoduls 40 abgelegt werden.

In einer weiteren möglichen Ausgestaltung der Erfindung kann das Zuführmodul mit einem fahrerlosen Transportsystem zusammenwirken.

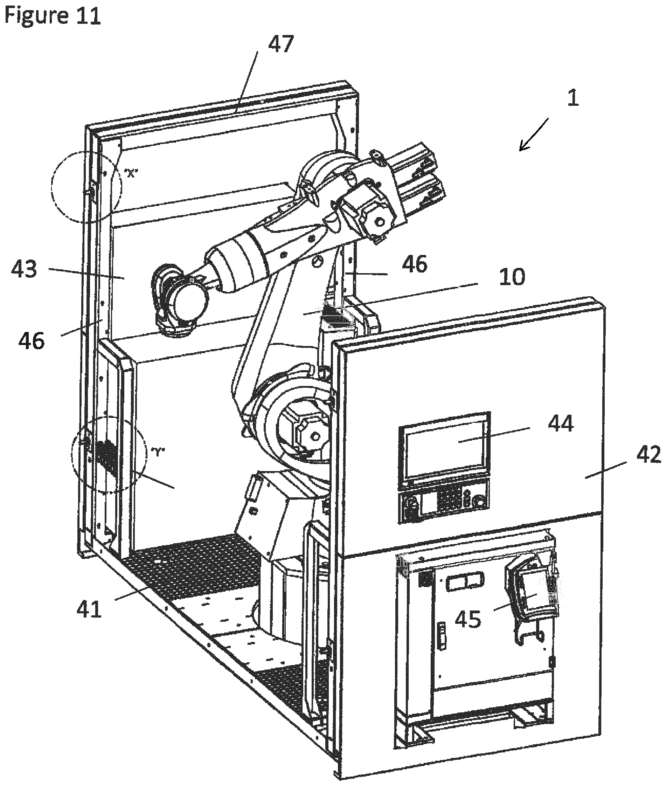

In Fig. 11 ist ein Ausführungsbeispiel eines Robotermoduls gemäß der vorliegenden Erfindung gezeigt, welches beispielsweise als Handhabungsmodul in einer erfindungsgemäßen Vorrichtung zur Entnahme von Werkstücken aus einem Behälter eingesetzt werden kann, wie sie oben dargestellt wurde. Das Robotermodul kann jedoch auch unabhängig von dieser Anwendung in vielfältigen Aufgabenbereichen eingesetzt werden.

Das Robotermodul 1 umfasst einen Zellenrahmen, welcher aus einer Bodenplatte 41 und den Zellenwänden 42 und 43 besteht. Auf der Bodenplatte ist dabei der Roboter 10 montiert. Bei dem Roboter 10 handelt es sich im Ausführungsbeispiel um einen Sechs-Achs-Industrieroboter.

Die Bodenplatte 41 ist dabei rechteckig, wobei die beiden Zellenwände 42 und 43 auf gegenüberliegenden Schmalseiten der Bodenplatte 41 angeordnet sind. Die beiden Längsseiten des Robotermoduls sind dagegen offen. Der Arbeitsbereich des Roboters 10 erstreckt sich über den Bereich des Robotermoduls hinaus durch die offenen Seiten in den angrenzenden Bereich. Hierdurch kann das Robotermodul 1 mit weiteren Modulen kombiniert werden, welche beispielsweise Werkstücke bereitstellen oder aufnehmen, die vom Roboter bearbeitet und / oder gehandhabt werden.

Die Zellenwände sind dabei im Ausführungsbeispiel aus Eckstreben 46 aufgebaut, welche über Querstreben 47 miteinander verbunden sind. Weiterhin weisen die Zellenwände eine Verkleidung auf. Die Zellenwände verhindern dabei den Zutritt zum Arbeitsraum des Roboters 10.

Ein Steuermodul für den Roboter ist in das Robotermodul integriert. Weiterhin weist das Robotermodul eine Benutzerschnittstelle auf, welche im Ausführungsbeispiel an einer Außenwand der Zellenwand 42 angeordnet ist. Die Schnittstelle weist dabei einen Display 44 sowie Eingabeelemente auf. Weiterhin ist ein Touchscreen 45 als ein Ein-/Ausgabeelement vorgesehen. Über die Benutzerschnittstelle kann auf das Steuermodul zugegriffen und insbesondere die Bewegung des Roboters angesteuert werden.

Weiterhin weist das Robotermodul eine Elektrik-, Pneumatik- und / oder Hydraulikversorgung 12 auf, welche über ein im Bereich der anderen Zellenwand 43 angeordneten Schaltschrank von außen zugänglich ist. Dabei handelt es sich um eine Energieversorgung nicht nur für den Roboter bzw. das Robotermodul selbst, sondern auch für weitere Module, welche über entsprechende Schnittstellen angeschlossen werden können.

Das erfindungsgemäße Robotermodul kann mit weiteren Modulen verbunden werden, um eine Bearbeitungs-, Montage- und / oder Handhabungseinheit zu bilden. Bevorzugt weisen auch die weiteren Module einen Zellenrahmen auf, welcher mit dem Zellenrahmen des Robotermoduls mechanisch verbunden werden kann.

Der Zellenrahmen des im Ausführungsbeispiel gezeigten Robotermoduls weist dabei mechanische Verbindungspunkte 48 zur Verbindung mit weiteren Modulen auf. Diese sind an den Eckstreben 46 vorgesehen. Im Ausführungsbeispiel handelt es sich dabei um Schraubdome 49, welche durch entsprechende Öffnungen in dem Zellenrahmen eines weiteren Moduls hindurchgeschoben und mit diesem verschraubt werden können.

Weiterhin können weitere Module zur Energieversorgung mit dem Robotermodul verbunden werden. Hierfür ist eine Pneumatik- und / oder Hydraulikschnittstelle 50 vorgesehen, über welche ein weiteres Modul an die Hydraulik- und / oder Pneumatikversorgung des Robotermoduls angeschlossen werden kann.

Weist das Robotermodul dabei eine Hydraulikversorgung auf, so umfasst diese bevorzugt eine Pumpe, welche Hochdruck-Hydraulikfluid bereitstellt. Ist eine Pneumatikversorgung vorgesehen, so umfasst diese bevorzugt einen Kompressor, welcher Druckluft zur Verfügung stellt.

Weiterhin kann auch der elektrische Anschluss eines weiteren Moduls über die elektrische Versorgung des Robotermoduls erfolgen. Bevorzugt ist auch hierfür eine elektrische Schnittstelle vorgesehen.

Weiterhin kann eine Schnittstelle zu dem Steuermodul des Roboters vorgesehen sein, über welche der Betrieb des Robotermoduls mit dem Betrieb anderer Module koordiniert werden kann.

In einem ersten Ausführungsbeispiel kann das weitere Modul dabei selbst eine Steuerung aufweisen, welche über die Schnittstelle mit dem Steuermodul des Robotermoduls 1 kommuniziert, vorzugsweise bidirektional kommuniziert.

In einer alternativen Ausführungsform kann die Ansteuerung von Aktoren eines weiteren Moduls auch über das Steuermodul des Robotermoduls erfolgen. Weiterhin können Sensordaten von Sensoren, welche in einem weiteren Modul angeordnet sind, über das Steuermodul des Robotermoduls ausgewertet werden.

Weiterhin ist auch eine Kombination aus den oben genannten Varianten einer Schnittstelle denkbar.

Das Robotermodul ist so aufgebaut, dass es komplett vormontiert als Baueinheit an den Aufstellort geliefert werden kann. Dabei kann der Zellenrahmen zum Transport gegebenenfalls über eine Längsstrebe, welche die Zellenwände in ihrem oberen Bereich miteinander verbindet, versteift werden. Der Transport des Robotermoduls kann dabei entweder hängend erfolgen, beispielsweise indem mit der Längsstrebe oder den Zellenwänden Haken verbunden werden, oder indem das Robotermodul hängend am Roboter transportiert wird. Alternativ kann das Robotermodul beispielsweise über einen Gabelstapler transportiert werden, welcher unter die Bodenplatte greift.

Das Robotermodul weist dabei bereits eine komplette Verkabelung des Roboters mit dem Steuermodul, der Energieversorgung und der Benutzerschnittstelle auf. Hierdurch sind am Aufstellort nur noch wenige Montageschritte durchzuführen.

Bevorzugt sind auch die weiteren Module entsprechend vormontiert und müssen nur noch mechanisch mit dem Robotermodul verbunden und über die entsprechenden Schnittstellen mit der Energieversorgung und / oder dem Steuermodul des Robotermoduls verbunden werden.

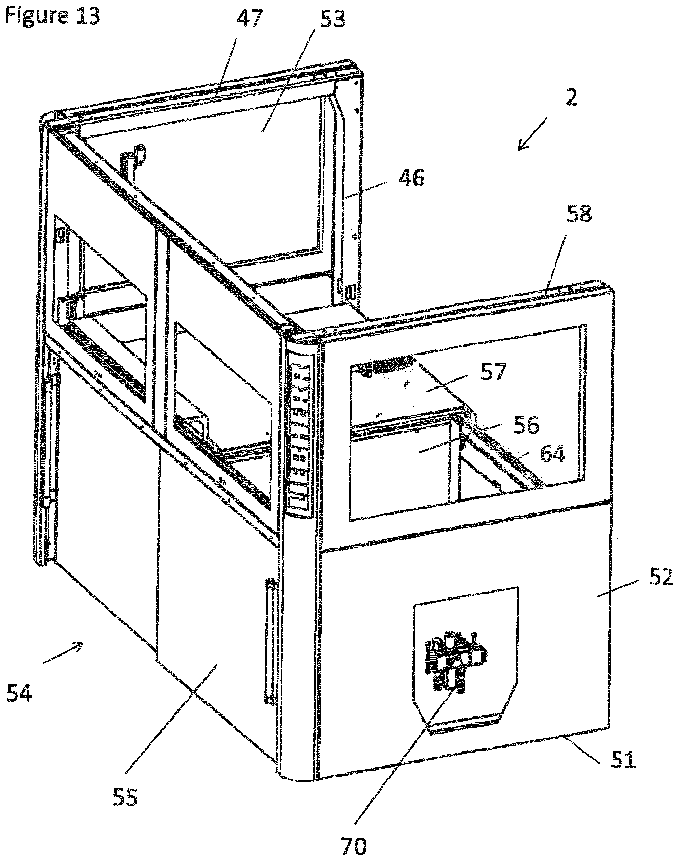

In Fig. 13 ist ein Ausführungsbeispiel eines Zuführmoduls gezeigt, welches mit dem erfindungsgemäßen Robotermodul 1, welches in diesem Fall als Handhabungsmodul arbeitet, verbunden werden kann. Zuführmodul 2 und Robotermodul bzw. Handhabungsmodul 1 bilden dabei bevorzugt eine Vorrichtung zum Entnehmen von in einem Behälter angeordneten Werkstücken, insbesondere zum Entnehmen von ungeordnet in einem Behälter angeordneten Werkstücken.

Das Zuführmodul 2 weist dabei ebenfalls einen Zellenrahmen auf, welcher mit dem Zellenrahmen des Handhabungsmoduls 1 verbindbar ist. Der Zellenrahmen weist dabei eine Bodenplatte 51 sowie Zellenwände 52, 53 und 54 auf. Eine Seite des Zuführmoduls ist dagegen offen, und wird mit einer offenen Seite des Handhabungsmoduls verbunden, sodass der Roboter 10 im Bereich des Zuführmoduls arbeiten kann.

Der Zellenrahmen des Zuführmoduls weist wiederum Eckstreben 56 auf, welche über Querstreben 47 und Längsstreben miteinander in Verbindung stehen. Weiterhin sind auch hier Abdeckungen bzw. Fenster vorgesehen, welche den Bereich des Zuführmoduls von unbefugtem Zutritt schützen.

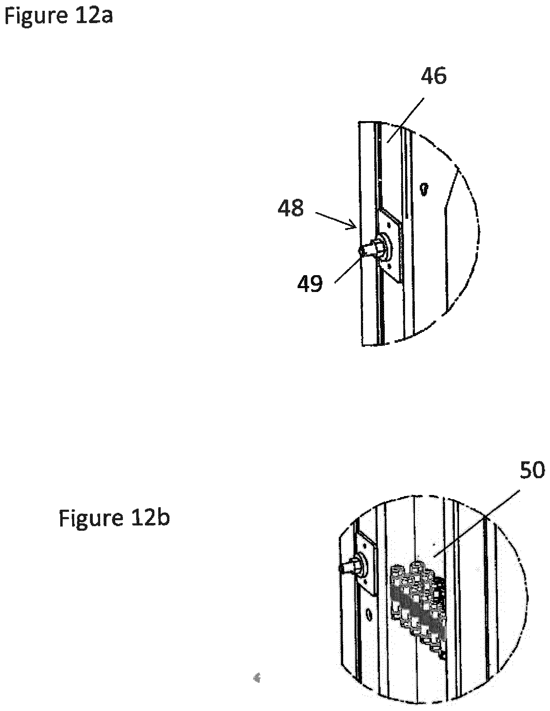

Die an der offenen Seite des Zellenrahmens angeordneten Eckstreben 46 können dabei mechanisch mit den Eckstreben 46 des Zellenrahmens des Robotermoduls verbunden werden, insbesondere über die in Fig. 12a dargestellten Befestigungspunkte.

Der Anschluss an die Energieversorgung des Robotermoduls erfolgt über die in Fig. 12b gezeigte Schnittstelle 50, welche mit einer entsprechenden Schnittstelle 70 des Zuführmoduls verbunden wird. Die Schnittstelle 70 des Zuführmoduls ist dabei im Inneren des Zuführmoduls angeordnet und über eine Türe in einer Außenwand zugänglich. Weiterhin können Sensoren und / oder Aktoren des Zuführmoduls mit dem Steuermodul des Robotermoduls über eine nicht dargestellte Elektronikschnittstelle verbunden werden.

Das Zuführmodul 2 ist ebenfalls komplett vormontiert und weist eine komplette Verkabelung, auf, welche lediglich eine Verbindung mit den Schnittstellen des Robotermoduls notwendig macht. Das Zuführmodul kann dabei beispielsweise über die Bohrungen 48 an einen Haken gehängt werden und hängend transportiert werden. Alternativ ist auch hier ein Transport über einen Gabelstapler denkbar.

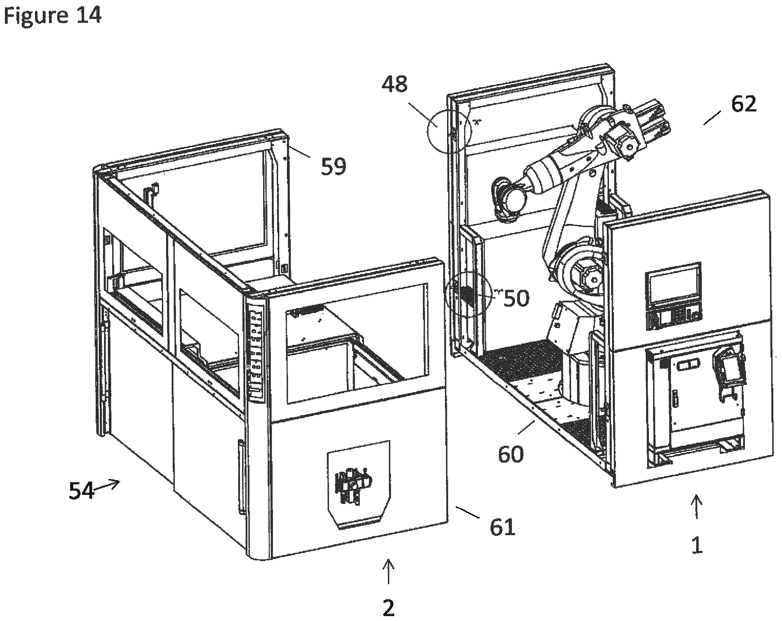

In Fig. 14, 15 und 16 ist nun die Kombination aus dem Handhabungsmodul 1 und dem Zuführmodul 2 gezeigt, welche gemeinsam eine Vorrichtung zur Entnahme von Werkstücken aus Behältern 66 bilden. Das Handhabungsmodul 1 ist dabei auf seiner dem Zuführmodul gegenüber liegenden freien Seite weiterhin mit einem Ausgabemodul 3 verbunden, auf welches später noch näher eingegangen wird.

Das Zuführmodul bildet dabei eine Zuführanordnung zur Bereitstellung von Behältern, aus welchen der Roboter Werkstücke entnehmen kann, welche auch unabhängig von dem erfindungsgemäßen modularen Aufbau eingesetzt werden kann. Besonders bevorzugt ist jedoch hier der oben beschriebene modulare Aufbau vorgesehen.

Die durch das Zuführmodul gebildete Zuführanordnung ist dabei auf einer Seite zur Bereitstellung und Entnahme von Behältern zugänglich. Im Ausführungsbeispiel sind hierfür Schiebetüren 55 vorgesehen, welche in der Zellenwand 54 eingelassen sind. Hierdurch sind zwei nebeneinander in der Zuführanordnung vorgesehene Zuführbereiche für jeweils einen Behälter zugänglich. Die Behälter können dabei beispielsweise über einen Gabelstapler 65 in die Zuführanordnung eingestellt oder nach dem Entleeren aus dieser entnommen werden.

Die Bereitstellung von zwei Behältern hat dabei den Vorteil, dass nach dem Entleeren eines ersten Behälters die Vorrichtung sofort mit dem Entleeren des zweiten Behälters fortfahren kann, ohne dass der Entnahmebetrieb unterbrochen werden muss, um den Behälter auszutauschen. Vielmehr kann der leere Behälter entnommen und durch einen vollen Behälter ersetzt werden, während der andere Behälter entleert wird.

Hierfür bedarf es jedoch einer Trennung der Zuführbereiche für die Behälter von dem Arbeitsbereich des Greifers, mit welchem die Werkstücke aus dem Behälter entnommen werden. Hierfür ist eine verschiebbare Haube 57 vorgesehen, welche entweder über den Zuführbereich für den ersten Behälter oder den Zuführbereich für den zweiten Behälter geschoben werden kann, und so diesen vom Arbeitsraum des Greifers trennt.

Bevorzugt sind die Türen 55 dabei so ausgestaltet, dass sie nur dann geöffnet werden können, wenn der der jeweiligen Tür zugeordnete Zuführbereich über die verschiebbare Haube 47 von dem Arbeitsbereich des Greifers abgetrennt ist. Hierdurch wird sichergestellt, dass beim Entnehmen und Einstellen eines Behälters in die Zuführanordnung keine Verletzungsgefahr besteht.

Die erfindungsgemäße Vorrichtung zum Entnehmen von Werkstücken aus den Behältern weist dabei eine Objekterfassungseinrichtung mit einem Sensor 63 auf, welcher oberhalb der jeweiligen Behälter angeordnet werden kann und die Werkstücke im Behälter erfasst. Insbesondere handelt es sich dabei um einen 3 D Laserscanner. Die Daten der Sensoranordnung werden dabei ausgewertet, um die einzelnen Werkstücke und deren Positionen zu identifizieren und ein zum Greifen geeignetes Werkstück zu ermitteln. Anhand der Positionsdaten dieses Werkstücks erfolgt dann eine Bahnplanung für den Greifer bzw. für dessen Greiferkinematik, insbesondere für den Roboter 10.

Die Sensoranordnung 63 ist dabei verfahrbar in der Zuführanordnung angeordnet. Hierfür ist insbesondere eine Verfahranordnung 64 vorgesehen, entlang welcher der Sensor 63 wahlweise über dem ersten und dem zweiten Behälter angeordnet werden kann. Dies hat zum einen den Vorteil, dass nur eine Sensoranordnung zum Erfassen der Werkstücke eingesetzt werden muss, da diese je nach Behälter, welcher entleert werden soll, über den jeweiligen Behälter gefahren werden kann. Zum anderen kann die Sensoranordnung, nachdem die Werkstücke erfasst werden, aus einem Bereich oberhalb des Behälters weggefahren werden, sodass der Arbeitsbereich des Greifers nicht durch die Sensoranordnung eingeschränkt wird. Nachdem ein Werkstück entnommen wurde, wird die Sensoranordnung dann wieder über den Behälter gefahren, um die verbleibenden Werkstücke zu erfassen.

Im Ausführungsbeispiel der vorliegenden Erfindung, bei welcher die gesamte Steuerelektronik für den Griff aus dem Behälter im Bereich des Robotermoduls 1 angeordnet ist, wird die Sensoranordnung 63 mit dem Steuermodul des Robotermoduls verbunden, wobei die Daten des Sensormoduls über das Steuermodul ausgewertet werden.

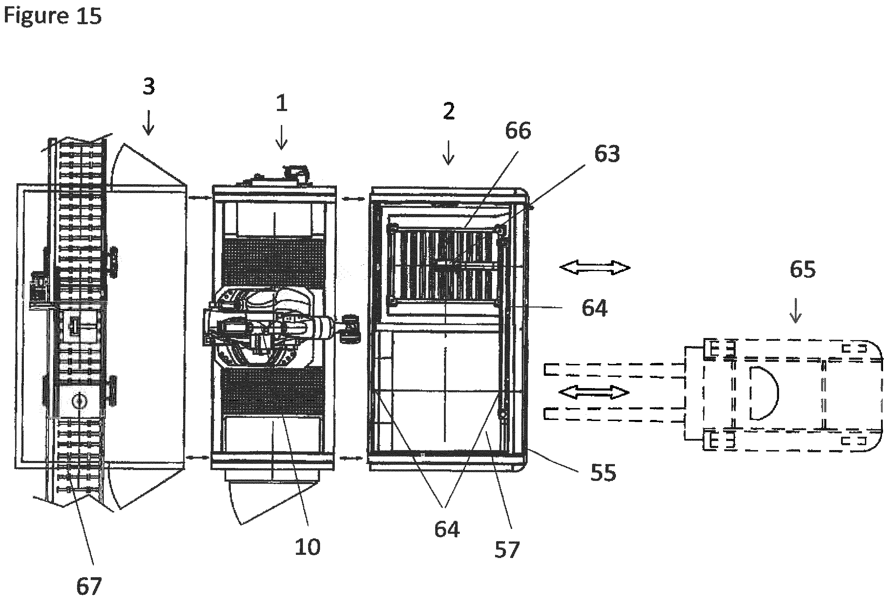

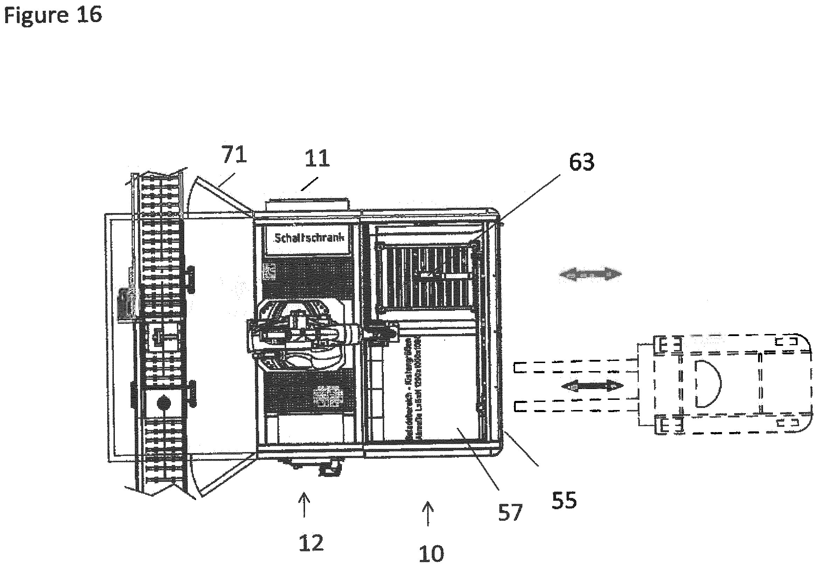

Das Handhabungsmodul ist, wie in Fig. 15 und 16 gezeigt, auf der dem Zuführmodul gegenüberliegenden offenen Seite mit einem Ausgabemodul verbunden. Im Ausführungsbeispiel weist auch dieses einen Zellenrahmen auf, welcher mit dem Zellenrahmen des Handhabungsmodules 1 verbunden wird. Die Ausgabeeinheit weist dabei eine Transportstrecke auf, auf welcher der Greifer der Handhabungseinheit die aus dem Behälter entnommenen Werkstücke ablegt. Bei der Transportstrecke handelt es sich dabei um ein Rollenband. Auf diesem können gegebenenfalls Nester transportiert werden, in welche die Werkstücke abgelegt werden. Der Zellenrahmen des Ausgabemoduls schützt auch hier vor unautorisiertem Zugang zum Arbeitsbereich des Roboters 10. Für Wartungsarbeiten sind Türen 71 vorgesehen, über welche das Innere der durch Zuführmodul, Handhabungsmodul und Ausgabemodul gebildeten Zelle betreten werden kann.

Durch den modulartigen Aufbau kann die erfindungsgemäße Vorrichtung zur Entnahme von Werkstücken aus einem Behälter mit nur geringem Konstruktions- und Montageaufwand in eine Vielzahl von unterschiedlichen Bereichen eingesetzt werden. Insbesondere kann dabei das erfindungsgemäße Handhabungsmodul mit bereits kundenseitig vorhandenen Ausgabeeinheiten kombiniert werden, sodass lediglich ein entsprechender Anschluss des Handhabungsmoduls insbesondere über Konstruktion eines Zellrahmens für das Ausgabemodul neu konstruiert werden muss. Weiterhin kann das Handhabungsmodul auch mit kundenseitig gegebenenfalls bereits vorhandenen Zuführmodulen kombiniert werden.

Das erfindungsgemäße Robotermodul kann jedoch auch in anderen Anwendungen zum einfachen und kostengünstigen Aufbau einer Roboterzelle zum Einsatz kommen. Insbesondere kann es dabei mit Bearbeitungs- und / oder Montagemodulen kombiniert werden.

## Patentansprüche

1. Robotermodul (1) mit einem Zellenrahmen und einem Roboter (10), wobei der Zellenrahmen eine Bodenplatte (41) aufweist, an welcher der Roboter montiert ist, und mindestens eine mit der Bodenplatte verbundene Zellenwand (42,43), und wobei das Robotermodul mit einem Steuermodul für den Roboter ausgestattet ist, wobei der Zellenrahmen vertikal verlaufende Eckstreben (46) aufweist, wobei die Eckstreben über horizontal verlaufende Querstreben (47) verbunden sind
**dadurch gekennzeichnet,**
**dass** an den Eckstreben mechanische Verbindungspunkte (48) zur Verbindung mit mindestens einem weiteren Modul vorgesehen sind, und wobei der Roboter einen Arbeitsbereich aufweist, welcher größer als die Grundfläche der Bodenplatte ist, wobei der Arbeitsbereich des Roboters so groß ist, dass er zu zwei Seiten des Zellenrahmens sich über dessen Grundfläche hinaus erstreckt und ein Greifer des Robotermoduls Werkstücke aus einem Bereich, welcher außerhalb einer ersten offenen Seite des Zellenrahmens angeordnet ist, entnehmen und in einen zweiten Bereich, welcher außerhalb einer zweiten offenen Seite des Zellenrahmens angeordnet ist, ablegen kann.

2. Robotermodul nach Anspruch 1, mit einer Elektrik-, Pneumatik- und/oder Hydraulikversorgung, wobei bevorzugt mindestens eine Elektrik-, Pneumatik- und/oder Hydraulik-Schnittstelle (50) zur Verbindung mit weiteren Modulen vorgesehen ist, und/oder wobei das Robotermodul eine Schnittstelle aufweist, welche eine Koordinierung des Betriebs des Robotermoduls mit anderen Modulen erlaubt und oder wobei das Robotermodul eine Schnittstelle für ein Fertigungssteuerungssystem aufweist, welche eine Koordinierung des Betriebs mit einem weiteren Fertigungssystem ermöglicht.

3. Robotermodul nach einem der vorangegangenen Ansprüche, wobei die Bodenplatte des Zellenrahmens eine rechteckige Form aufweist und bevorzugt eine längere und eine kürzere Seite aufweist und/oder wobei der Zellenrahmen mindestens zwei Zellenwände aufweist, wobei der Zellenrahmen bevorzugt auf zwei Seiten Zellenwände aufweist und auf zwei Seiten offen ist und/oder wobei die beiden Zellenwände bevorzugt auf gegenüberliegenden Seiten der Bodenplatte angeordnet sind, insbesondere auf gegenüberliegenden Schmalseiten, oder wobei die beiden Zellenwände auf angrenzenden Seiten der Bodenplatte angeordnet sind.

4. Robotermodul nach einem der vorangegangenen Ansprüche, wobei mindestens zwei der Seitenwände des Zellenrahmens in einem oberen Bereich über eine Transportstrebe miteinander verbunden sind.

5. Robotermodul nach einem der vorangegangenen Ansprüchen, mit einem Bedienmodul, welches bevorzugt an einer Außenseite einer Zellwand angeordnet ist, und/oder mit einem Schaltschrank, welcher bevorzugt von einer Außenseite einer Zellwand aus zugänglich ist, und/oder einem mobilen Bedienhandgerät ausgestattet ist.

6. Robotermodul nach einem der vorangegangenen Ansprüchen, wobei es sich um ein Handhabungsmodul handelt, wobei das Steuermodul eine Steuerroutine zum Greifen und/oder Ablegen von Werkstücken mittels des Roboters aufweist, wobei besonders bevorzugt das Robotermodul ein Greifen von ungeordnet in einem Behälter angeordneten Werkstücken erlaubt, wobei das Steuermodul bevorzugt eine Schnittstelle zu einer Objekterkennungseinrichtung zum Erfassen der Werkstücke im Behälter aufweist.

7. Handhabungsanlage für Werkstücke mit einem Robotermodul nach einem der vorangegangenen Ansprüche und einem Zwischenmodul (38) mit einem Zellenrahmen und einer Zwischenstation, wobei der Zellenrahmen des Zwischenmoduls mechanische Verbindungspunkte und bevorzugt eine Elektrik-, Pneumatik- und/oder Hydraulik-Schnittstelle zur Verbindung mit mindestens einem weiteren Modul und bevorzugt mit zwei Modulen aufweist, und/oder wobei das Zwischenmodul eine Schnittstelle aufweist, welche eine Koordinierung des Betriebs des Zwischenmoduls mit anderen Modulen erlaubt, und/oder wobei das Zwischenmodul eine Schnittstelle für ein Fertigungssteuerungssystem aufweist, welche eine Koordinierung des Betriebs mit einem weiteren Fertigungssystem ermöglicht.

8. Handhabungsanlage für Werkstücke mit einem Robotermodul nach einem der vorangegangenen Ansprüche und einem Zuführmodul (39) mit einem Zellenrahmen und einer Anordnung zur Bereitstellung eines Behälters mit Werkstücken, wobei der Zellenrahmen des Zuführmoduls mechanische Verbindungspunkte und bevorzugt eine Elektrik-, Pneumatik- und/oder Hydraulik-Schnittstelle zur Verbindung mit dem Robotermodul aufweist, und/oder wobei das Zuführmodul eine Schnittstelle aufweist, welche eine Koordinierung des Betriebs des Zuführmoduls mit anderen Modulen erlaubt, und/oder wobei das Zuführmodul eine Schnittstelle für ein Fertigungssteuerungssystem aufweist, welche eine Koordinierung des Betriebs mit einem weiteren Fertigungssystem ermöglicht.

9. Handhabungsanlage nach Anspruch 8, wobei der Zellenrahmen eine Bodenplatte aufweist, an welcher die Anordnung zur Bereitstellung mindestens eines Behälters mit Werkstücken angeordnet ist, und/oder wobei der Zellenrahmen mindestens zwei Zellenwände aufweist und auf mindestens einer Seite hin offen ist, wobei die Anordnung zur Bereitstellung eines Behälters mit Werkstücken bevorzugt auf mindestens einer Seite von außen zugänglich ist, insbesondere über eine auf mindestens einer Seite angeordnete Türe oder Lichtschranke und/oder eine auf mindestens einer Seite angeordnete automatische Behälterzu- und/oder abführstrecke, wobei diese Seite bevorzugt der offenen Seite gegenüberliegt, und/oder wobei es sich bei der offenen Seite bevorzugt um die Breitseite des Zuführmoduls handelt.

10. Handhabungsanlage nach Anspruch 8 oder 9, wobei die Anordnung zur Bereitstellung eines Behälters mit Werkstücken mindestens zwei Behälter aufnehmen kann.

11. Handhabungsanlage nach Anspruch 10, wobei das Zuführmodul eine Trennvorrichtung aufweist, über welche ein Zuführbereich für einen Behälter von einem Arbeitsbereich trennbar ist, wobei insbesondere eine Haube vorgesehen ist, welche im Zuführmodul so angeordnet ist, dass sie wahlweise den Zuführbereich für den einen oder den anderen Behälter abdecken kann.

12. Handhabungsanlage nach Anspruch 10, wobei das Zuführmodul eine Transportanordnung zum Transport der Behälter im inneren des Zuführmoduls aufweist, wobei die Transportanordnung bevorzugt mit einer automatischen Behälterzu- und/oder abführstrecke zusammenwirken kann, und/oder wobei eine Lichtschranke vorgesehen ist, welche den Zuführbereich absichert.

13. Handhabungsanlage mit einem Robotermodul nach einem der Ansprüche 1 bis 6 und einem Ausgabe-, Bearbeitungs- und/oder Montagemodul zur Verbindung mit dem Robotermodul, mit einer Werkstückablage, auf welcher die Werkstücke vereinzelt und/oder in einer definierten Position abgelegt werden, und mechanischen Verbindungspunkten zur Verbindung mit einem Robotermodul nach einem der vorangegangenen Ansprüche, wobei das Ausgabemodul bevorzugt eine Transportstrecke für die Werkstücke aufweist und wobei das Bearbeitungs- und/oder Montagemodul bevorzugt eine Bearbeitungs- und/oder Montageeinheit aufweist, welche die Werkstücke bearbeitet und/oder montiert.

## Claims

1. A robot module (1) having a cell frame and a robot (10), wherein the cell frame has a base plate (41) at which the robot is installed and at least one cell wall (42, 43) connected to the base plate and wherein the robot module is equipped with a control module for the robot, wherein the cell frame has vertically extending corner struts (16), with the corner struts being connected via horizontally extending cross-struts (47),
**characterized in that**
mechanical connections points (48) for connection to at least one further module are provided at the corner struts, and with the robot having a working range that is greater than the base area of the base plate, with the working range being so large that it extends beyond its base area on both sides of the cell frame and a gripper of the robot module being able to remove workpieces from a zone that is arranged outside a first open side of the cell frame and being able to place them into a second zone that is arranged outside a second open side of the cell frame.

2. A robot module in accordance with claim 1 having an electrical, pneumatic, and/or hydraulic supply, wherein at least one electrical, pneumatic, and/or hydraulic interface (50) for connection to further modules is preferably provided, and/or wherein the robot module has an interface that permits a coordination with other modules, and/or wherein the robot module has an interface for a production control system that enables a coordination of the operation with a further production system.

3. A robot module in accordance with one of the preceding claims, wherein the base plate of the cell frame has a rectangular shape and preferably has a longer and a shorter side, and/or wherein the cell frame has at least two cell walls, with the cell frame preferably having cell walls on two sides and being open on two sides, and/or wherein the two cell walls are preferably arranged on oppositely disposed sides, in particular on oppositely disposed narrow sides, or wherein the two cell walls are arranged on adjacent sides of the base plate.

4. A robot module in accordance with one of the preceding claims, wherein at least two of the side walls of the cell frame are connected to one another via a transport strut in an upper zone.

5. A robot module in accordance with one of the preceding claims having an operator module that is preferably arranged on an outer side of a cell wall and/or is equipped with a switch cabinet that is preferably accessible from an outer side of a cell wall and/or with a mobile operator handheld device.

6. A robot module in accordance with one of the preceding claims wherein it is a handling module, wherein the control module comprises a control routine for picking and/or placing workpieces by means of the robot, wherein the robot module particularly preferably permits a picking of workpieces arranged in a scattered manner in a container, and wherein the control module preferably has an interface with an object recognition device for detecting the workpieces in the container.

7. A handling system for workpieces having a robot module in accordance with one of the preceding claims and having a buffer module (38) with a cell frame and a buffer station, wherein the cell frame of the buffer module has mechanical connection points and preferably has an electrical, pneumatic, and/or hydraulic interface for connection to at least one further module and preferably to two modules, and/or wherein the buffer module has an interface that permits a coordination of the operation of the buffer module with other modules and/or wherein the buffer module has an interface for a production control system that enables a coordination of the operation with a further production system.

8. A handling system for workpieces having a robot module in accordance with one of the preceding claims and having a feed module (39) with a cell frame and an arrangement for providing a container having workpieces, wherein the cell frame of the feed module has mechanical connection points and preferably has an electrical, pneumatic, and/or hydraulic interface for connection to the robot module, and/or wherein the feed module has an interface that permits a coordination of the operation of the feed module with other modules and/or wherein the feed module has an interface for a production control system that enables a coordination of the operation with a further production system.

9. A handling system in accordance with claim 8, wherein the cell frame has a base plate at which the arrangement for providing at least one container having workpieces is arranged, and/or wherein the cell frame has at least two cell walls and is open on at least one side, wherein the arrangement for providing a container having workpieces is preferably accessible from the outside on at least one side, in particular via a door or light barrier arranged on at least one side and/or an automatic container feed and/or removal path arranged on at least one side, with this side preferably being disposed opposite the open side and/or with the open side preferably being the wide side of the feed module.

10. A handling system in accordance with claim 8 or claim 9, wherein the arrangement for providing a container having workpieces can receive at least two containers.

11. A handling system in accordance with claim 10, wherein the feed module has a separating apparatus via which a feed zone for a container can be separated from a working zone, wherein a hood is in particular provided which is arranged in the feed module such that it can selectively cover the feed zone for the one or the other container.

12. A handling system in accordance with claim 10, wherein the feed module has a transport arrangement for transporting the containers in the interior of the feed module, wherein the transport arrangement can preferably cooperate with an automatic container feed path and/or removal path, and/or wherein a light barrier is provided which secures the feed zone.

13. A handling system having a robot module in accordance with one of the claims 1 to 6 and having an output, machining, and/or assembly module for connection to the robot module, having a workpiece placement area on which the workpieces are placed down in a scattered manner and/or in a defined position and having mechanical connection points for connection to a robot module in accordance with one of the preceding claims, wherein the output module preferably has a transport path for the workpieces, and wherein the machining and/or assembly module preferably has a machining and/or assembly unit that machines and/or assembles the workpieces.

## Revendications

1. Module de robot (1) comprenant un cadre de cellule et un robot (10), le cadre de cellule comportant une plaque de base (41), sur laquelle est monté le robot, et au moins une paroi de cellule (42, 43) reliée à la plaque de base, et le module de robot étant équipé d'un module de contrôle pour le robot, le cadre de cellule comportant des montants d'angle (46) s'étendant verticalement, les montants d'angle étant reliés par des entretoises (47) s'étendant horizontalement,
**caractérisé en ce que**
sur les montants d'angle, des points de liaison mécaniques (48) sont prévus pour la liaison avec au moins un autre module, et le robot comportant une zone de travail qui est plus grande que la surface de base de la plaque de base, la zone de travail du robot étant d'une grandeur telle qu'elle s'étend sur deux côtés du cadre de cellule au-delà de sa surface de base et un préhenseur du module de robot peut prélever des pièces dans une zone, qui est disposée en dehors d'un premier côté ouvert du cadre de cellule et les déposer dans une seconde zone qui est disposée en dehors d'un second côté ouvert du cadre de cellule.

2. Module de robot selon la revendication 1, comprenant une alimentation électrique, pneumatique et/ou hydraulique, au moins une interface électrique, pneumatique et/ou hydraulique (50) étant de préférence prévue pour la liaison avec d'autres modules, et/ou le module de robot comportant une interface, qui permet une coordination du fonctionnement du module de robot avec d'autres modules et ou le module de robot comportant une interface pour un système de contrôle de production, qui permet une coordination du fonctionnement avec un autre système de production.

3. Module de robot selon l'une des revendications précédentes, dans lequel la plaque de base du cadre de cellule présente une forme rectangulaire et présente de préférence un côté plus long et un côté plus court et/ou dans lequel le cadre de cellule comporte au moins deux parois de cellule, le cadre de cellule comportant de préférence des parois de cellule sur deux côtés et étant ouvert sur deux côtés et/ou dans lequel les deux parois de cellule sont disposées de préférence sur des côtés opposés de la plaque de base, en particulier sur des côtés étroits opposés, ou dans lequel les deux parois de cellule sont disposées sur des côtés adjacents de la plaque de base.

4. Module de robot selon l'une des revendications précédentes, dans lequel au moins deux des parois latérales du cadre de cellule sont reliées dans une zone supérieure par une traverse de transport.

5. Module de robot selon l'une des revendications précédentes, comprenant un module de commande, qui est disposé de préférence sur un côté extérieur d'une paroi de cellule, et/ou comprenant une armoire électrique, qui est de préférence accessible depuis un côté extérieur d'une paroi de cellule, et/ou étant équipé d'un appareil de commande portatif.

6. Module de robot selon l'une des revendications précédentes, dans lequel il s'agit d'un module de manipulation, le module de contrôle présentant une routine de contrôle pour la préhension et/ou le dépôt de pièces au moyen du robot, le module de robot permettant de manière particulièrement préférée une préhension de pièces disposées de manière non ordonnée dans un contenant, le module de contrôle comportant de préférence une interface avec un dispositif de reconnaissance d'objet pour détecter les pièces dans le contenant.

7. Installation de manipulation pour pièces comprenant un module de robot selon l'une des revendications précédentes et un module intermédiaire (38) doté d'un cadre de cellule et d'un poste intermédiaire, le cadre de cellule du module intermédiaire comportant des points de liaison mécaniques et de préférence une interface électrique, pneumatique et/ou hydraulique pour la liaison avec au moins un autre module et de préférence avec deux modules, et/ou le module intermédiaire comportant une interface, qui permet une coordination du fonctionnement du module intermédiaire avec d'autres modules, et/ou le module intermédiaire comportant une interface pour un système de contrôle de production, qui permet une coordination du fonctionnement avec un autre système de production.

8. Installation de manipulation pour pièces comprenant un module de robot selon l'une des revendications précédentes et un module d'alimentation (39) doté d'un cadre de cellule et d'un agencement pour mettre à disposition un contenant avec des pièces, le cadre de cellule du module d'alimentation comportant des points de liaison mécaniques et de préférence une interface électrique, pneumatique et/ou hydraulique pour la liaison avec le module de robot, et/ou le module d'alimentation comportant une interface, qui permet une coordination du fonctionnement du module d'alimentation avec d'autres modules, et/ou le module d'alimentation comportant une interface pour un système de contrôle de production, qui permet une coordination du fonctionnement avec un autre système de production.

9. Installation de manipulation selon la revendication 8, dans laquelle le cadre de cellule comporte une plaque de base, sur laquelle est disposé l'agencement pour mettre à disposition au moins un contenant avec des pièces, et/ou dans laquelle le cadre de cellule comporte au moins deux parois de cellule et est ouvert sur au moins un côté, l'agencement pour mettre à disposition un contenant avec des pièces étant de préférence accessible de l'extérieur sur au moins un côté, en particulier par une porte ou barrière photoélectrique disposée sur au moins un côté et/ou une voie d'alimentation et/ou de sortie de contenants automatique disposée sur au moins un côté, ce côté étant de préférence opposé au côté ouvert, et/ou dans laquelle le côté ouvert est de préférence le côté large du module d'alimentation.

10. Installation de manipulation selon la revendication 8 ou 9, dans laquelle l'agencement pour mettre à disposition un contenant avec des pièces peut recevoir au moins deux contenants.

11. Installation de manipulation selon la revendication 10, dans lequel le module d'alimentation comporte un dispositif de séparation, par le biais duquel une zone d'alimentation pour un contenant peut être séparée d'une zone de travail, un capot étant en particulier prévu, qui est disposé dans le module d'alimentation de manière à recouvrir la zone d'alimentation de manière sélective pour l'un ou l'autre contenant.

12. Installation de manipulation selon la revendication 10, dans laquelle le module d'alimentation comporte un agencement de transport pour le transport des contenants à l'intérieur du module d'alimentation, l'agencement de transport pouvant de préférence coopérer avec une voie d'alimentation et/ou de sortie de contenants automatique, et/ou dans laquelle une barrière photoélectrique est prévue, qui sécurise la zone d'alimentation.

13. Installation de manipulation comprenant un module de robot selon l'une des revendications 1 à 6 et un module de distribution, d'usinage et/ou d'assemblage pour la liaison avec le module de robot, comprenant un emplacement de dépôt de pièces sur lequel les pièces sont déposées séparément et/ou dans une position définie et des points de liaison mécaniques pour la liaison avec un module de robot selon l'une des revendications précédentes, le module de distribution comportant de préférence une voie de transport pour les pièces et le module d'usinage et/ou d'assemblage comportant de préférence une unité d'usinage et/ou d'assemblage, qui usine et/ou assemble les pièces.
